(19) Europäisches Patentamt
European Patent Office
Office européen des brevets

(11) EP 2 841 490 B1

# (12) EUROPEAN PATENT SPECIFICATION

(45) Date of publication and mention of the grant of the patent:
**07.10.2020 Bulletin 2020/41**

(21) Application number: **13719463.5**

(22) Date of filing: **22.04.2013**

(51) Int Cl.:
***C08G 77/392*** *(2006.01)* ***C08L 83/04*** *(2006.01)*
***G02B 6/38*** *(2006.01)*

(86) International application number:
**PCT/EP2013/058298**

(87) International publication number:
**WO 2013/160252 (31.10.2013 Gazette 2013/44)**

(54) **DRY SILICONE GELS AND THEIR METHODS OF MAKING USING THIOL-ENE CHEMISTRY**

TROCKENE SILIKONGELE UND VERFAHREN ZU DEREN HERSTELLUNG UNTER VERWENDUNG VON THIOL-EN-CHEMIE

GELS SILICONE SECS ET LEURS PROCÉDÉS DE PRODUCTION À L'AIDE DE LA CHIMIE THIOL-ÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2012 US 201213455990**

(43) Date of publication of application:
**04.03.2015 Bulletin 2015/10**

(73) Proprietor: **CommScope Connectivity Belgium BVBA**
**3010 Kessel-Lo (BE)**

(72) Inventors:
- **VAN DEN BERG, Otto**
  **B-3012 Wilsele (BE)**
- **BERGHMANS, Stephane**
  **B-9170 Sint-pauwels (BE)**
- **DU PREZ, Filip**
  **B-9000 Gent (BE)**

(74) Representative: **Patentanwälte Bressel und Partner mbB**
**Potsdamer Platz 10**
**10785 Berlin (DE)**

(56) References cited:
**WO-A1-2011/136170**
**US-A- 4 284 539**
**US-A1- 2004 209 972**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 841 490 B1

## Description

## BACKGROUND

The invention relates to a closure or interconnect system.

Closure systems are used to protect intemal components from degradation caused by extemal environments. For example, intemal components such as fiber optic cables and copper cables are often enclosed in closure systems. Examples of commercially available closure systems include the Outdoor Fiber Drop Repair (OFDR), the Outdoor Fiber Distribution Closure (OFDC), and the Fiber optic Infrastructure System Technology (FIST), available from Tyco Electronics, Kessel-Lo, Belgium. In particular, the OFDR Closure is used to break out fibers from a looped fiber optic cable to connect users such as business customers or persons in multiple or single living units. These types of closures can be used in aerial, pedestal, and underground environments. Other closure systems are commercially available for use with communication and energy transmission cables.

Closure systems typically include intemal components such as fiber organizers, cable seals, and termination devices, drop cable seals for a number of drops with drop cable termination devices, and universal splice holders for a number of splices. These intemal components may be subject to environmental factors such as varying moisture levels, heat and cold, and exposure to other chemical substances. The closure systems are preferably protected from damage with a sealant of some sort. Conventional sealants, however, suffer from a number of drawbacks that make them unsuitable for certain closure systems.

Sealants are often used for insulation and for protection against water, corrosion, and environmental degradation, and for thermal management. Prior to now, a number of sealants have been known; however, currently available sealants have certain drawbacks and disadvantages that make them inadequate for specific uses and for use in contact with certain materials. In particular, there is an unmet need for sealants that are suitable for fiber optic and electronic closure systems.

Suitable sealing systems for closures are needed for use with a variety of different cables. For examples, a sealing system is needed for cables termed Low Smoke Zero Halogen ("LSZH"), also known as Low Smoke Halogen Free ("LSHF"), Low Smoke Zero Halogen ("LSOH"), and Zero Halogen Low Smoke ("OHLS") among other things.

LSZH cables are characterized by containing no halogenated flame-retardants, and produce relatively limited amounts of smoke when exposed to sources of heat such as a flame or heated wires. LSZH cables provide an alternative to the frequently used polyethylene, PVC, or thermoplastic urethane coatings. Polyethylene, PVC, or thermoplastic urethane, when they contain halogens, may produce hazardous halogen-containing compounds such as HCl or HBr gas. An improvement to current LSZH cable closure systems is needed to enhance performance in environmentally sensitive environments.

Traditionally, thermoplastic oil gels have been used in LSZH closure systems. A problem, however, with thermoplastic gels used as sealants, and in closure systems in general, is that they often contain high amounts of mineral oil. A problem has been observed with oil-containing gels in that they may leak oil. The oil in these gels may leak from the gel and cause deterioration, discoloring, or degradation of the cable in the closure system. In some extreme cases, a cable may even snap under compression due to the damage done by the oil leaking from the thermoplastic gel. There exists an unmet need for alternatives to oil containing gels. Presently available alternatives to oil-containing gels, however, have not provided such a solution. For one, sealants other than oil-containing gels may have one or more undesirable properties. Examples of undesirable properties include excessive hardness, inadequate temperature resistance (e.g., flammability or a tendency to become brittle with cold, *i.e.,* inadequate glass transition temperature) and viscoelastic properties, chemical incompatibility, high water absorption, and hydrolytic instability. Accordingly there exists an unmet need for closure systems with suitable hardness, viscoelastic properties, low permanent set or compression set, long-term performance (e.g., > 20 years), amongst other properties.

In contrast to oil-containing thermoplastic gels, dry silicone thermoset gels contain relatively low, or do not contain at all, amounts of diluent fluids such as unreactive silicone oil or mineral oil. A dry silicone gel, instead of being a thermoplastic gel, is a thermoset gel. Thermoset gels can be produced by chemical crosslinking. Examples of thermoset gels are silicone dry gels and polyurethane gels. A dry silicone gel makes no use of an extra solvent or diluent fluid but can still be categorized under the term "gel" because of the similarity in physical properties and behavior, or because of its viscoelastic properties. Dry silicone gels are however used more rarely than free oil-containing gels for a number of reasons. For example, dry silicone gels are rare because they are more expensive and difficult to process than certain other types of gels.

Recent methods of making dry silicone gels have included the use of a catalyst to ensure that the crosslinking reaction takes place. These reactions may use an expensive platinum catalyst and be sensitive to poisoning and may make processing of the dry silicone gel harder to control. In these catalytic reaction mechanisms, once the components are mixed, the crosslinking reaction begins. By lowering the temperature, the reaction may be slowed down but will not stop. Inhibitors or moderators may be added to slow down the reaction, but these also may not stop the reaction entirely.

Accordingly, there exists an unmet need for an improved dry silicone gel and an improved method of preparing a dry silicone gel (e.g., without the use of a catalyst).

WO 2011/136170 A1 discloses a photocurable silicone gel composition formed from an organopolysiloxane, a mercaptoalkyl group containing organopolysiloxane, a photo polymerization initiator, and a hindered amine compound. The hindered amine compound is said to suppress the problem of softening degradation due to high temperature and high humidity.

US 2004/29972 A1 discloses a dual-cure silicone compound that is useful as an encapsulating/potting compound. The dual-cure silicone compound is made from a mixture of a first polysiloxane component having a terminal mercapto and alkoxy functionality and a second polysiloxane component having a terminal vinyl and alkoxy functionality. Both a UV initiated crosslinking mechanism and a moisture-initiated crosslinking mechanism are employed in making the dual-cure compound.

US 428539 A discloses oxygen curable compositions provided by mixing a mercaptoorganopolysiloxane, an alkiphatically unsaturated polydiorganosiloxane, and a metal salt of a carboxulic acid, where the metal is iron, manganese, or nickel. The compositions are said to be curable at room temperature in the presence of an oxygen-containing atmosphere such as air.

## BRIEF SUMMARY

The technical problem is to provide an improved closure or interconnect system.

The problem is solved by a closure or interconnect system with the features of claim 1.

In one embodiment, a method is provided for making a dry silicone gel by thiol-ene chemistry ("efficient linking chemistry"). The method comprises providing a base polymer having a vinyl-silicone group, a crosslinker having thiol groups, and an initiator. The method further comprises providing heat or ultraviolet (UV) light. The method further comprises reacting the base polymer and crosslinker in the presence of the initiator to form the dry silicone gel.

In some embodiments, the method further comprises providing a chain extender having thiol groups, wherein the base polymer, crosslinker, and chain extender are reacted in the presence of the initiator. In other embodiments, the method further comprises providing at least one additive selected from the group consisting of: flame retardants, coloring agents, adhesion promoters, stabilizers, fillers, dispersants, flow improvers, plasticizers, slip agents, toughening agents, and combinations thereof. In one embodiment, the method further comprises providing between 0.1 wt% and 30 wt% of a toughening agent. In some embodiments, the toughening agent is a fumed silica (e.g., surface-treated hydrophobized fumed silica).

In certain embodiments, the initiator is a photoinitiator or thermal initiator. In one embodiment, the photoinitiator is 2,2-dimethoxy-2-phenylaceto-phenone. In other embodiments, the photoinitiator may be selected from one or more of the following compounds: acetophenone, anisoin, anthraquinone, benzil, benzoin, benzoin ethyl ether, benzoin isobutyl ether, benzoin methyl ether, benzophenone, benzophenone/1-hydroxycyclohexyl phenyl ketone (50/50 blend), 3,3',4,4'-benzophenonetetracarboxylic dianhydride, benzoylbiphenyl, 2-benzyl-2-(dimethylamino)-4'-morpholinobutyrophenone, 4,4'-bis(diethylamino) benzophenone, 4,4'-bis(dimethylamino) benzophenone, camphorquinone, 2-chlorothioxanthen-9-one, dibenzosuberenone, 2,2-diethoxyacetophenone, 4,4'-dihydroxybenzophenone, 4-(dimethylamino) benzophenone, 4,4'-dimethylbenzil, 2,5-dimethylbenzophenone, 3,4-dimethylbenzophenone, diphenyl(2,4,6-trimethylbenzoyl) phosphine oxide/2-hydroxy-2-methylpropiophenone (50/50 blend), 4'-ethoxyacetophenone, 2-ethylanthraquinone, 3 3'-hydroxyacetophenone, 4 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3 -methylbenzophenone, methybenzoylformate, 2-methyl-4'-(methylthio)-2-morpholinopropiophenone, phenanthrenequinone, 4'-phenoxyacetophenone (98%), and thioxanthen-9-one.

In other embodiments, the thermal initiator is a peroxide or azo-compound. In some embodiments, the thermal initiator is selected from the group consisting of, 2,2 azobisisobutyronitrile (AIBN), cyclohexyl analogs of AIBN, 2,2'-azobis(4-methoxy-2,4-dimethyl valeronitrile) (V70), and mixtures thereof.

In certain embodiments, the crosslinker is a polydimethylsiloxane (PDMS) copolymer having a thiol content between 0.1 mmol/g and 10 mmol/g and a molecular weight between 2,000 g/mol and 20,000 g/mol. In some embodiments, the crosslinker is a (mercaptopropyl) methylsiloxane-dimethylsiloxane copolymer. In some embodiments, the chain extender is a thiol end-capped PDMS or a thio-functional telechelic PDMS.

In some embodiments, the base polymer comprises a vinyl-terminated polydimethylsiloxane. The base polymer may have one or more of the following properties: (a) a molecular weight between 5,000 g/mol and 70,000 g/mol; (b) a viscosity between 100 $mm^2/s$ and 165,000 $mm^2/s$; and (c) a vinyl content between 0.01 mmol/g and 0.1 mmol/g.

In certain embodiments, the dry silicone gel comprises one or more of the following properties: (a) a hardness between 80 g and 300 g or a hardness between 100 g and 300 g; (b) a stress relaxation between 20% and 65%, or between 40% and 60%, when the gel is subjected to a deformation of 50% of its original size; (c) a compression set between 4% and 20% after 50% strain has applied to the gel for 1000 hours at 70°C; and (d) less than 10% oil bleed

out after being under compression of 1.2 atm for 60 days at 60°C.

In another embodiment, a method is provided for making a dry silicone gel by thiol-ene chemistry. The method comprises providing a vinyl-terminated polydimethylsiloxane having a molecular weight between 28,000 g/mol and 70,000 g/mol, a viscosity between 3,000 $mm^2/s$ and 7,000 $mm^2/s$, and a vinyl content between 0.01 mmol/g and 0.1 mmol/g. The method further comprises providing a crosslinker having a thiol content between 0.1 mmol/g and 10 mmol/g and a molecular weight between 2,000 g/mol and 20,000 g/mol. The method further comprises providing a chain extender. The method further comprises providing a photo or thermal initiator. The method further comprises providing a fumed silica hardening agent. The method further comprises providing heat or UV light. The method further comprises reacting the base polymer, crosslinker, and chain extender in the presence of the initiator to form the dry silicone gel.

In another embodiment, a dry silicone gel composition is provided. The dry silicone gel comprises 45-99.99 wt% of a base polymer having a vinyl-silicone group. The gel further comprises 0.01-5 wt% of a crosslinker having thiol groups. The gel further comprises 0-50 wt% of a chain extender having thiol groups. In some embodiments, the dry silicone gel composition comprises between 90-99.9 wt% base polymer, 0.1-5 wt% crosslinker, and 0.01-5 wt% chain extender. In some embodiments, the gel further comprises at least one additive selected from the group consisting of: flame retardants, coloring agents, adhesion promoters, stabilizers, fillers, dispersants, flow improvers, plasticizers, slip agents, toughening agents, and combinations thereof. In one embodiment, the gel further comprises between 0.1 wt % and 30 wt% of a toughening agent. In some embodiments, the toughening agent is a fumed silica. In certain embodiments, the dry silicone gel comprises one or more of the following properties: (a) a hardness between 80 g and 300 g or a hardness between 100 g and 300 g; (b) a stress relaxation between 20% and 65%, or between 40% and 60%, when the gel is subjected to a deformation of 50% of its original size; (c) a compression set between 4% and 20% after 50% strain has applied to the gel for 1000 hours at 70°C; and (d) less than 10% oil bleed out after being under compression of 1.2 atm for 60 days at 60°C.

In certain embodiments, the base polymer is a vinyl-terminated polydimethylsiloxane. The base polymer may have one or more of the following properties: (a) a molecular weight between 5,000 g/mol and 70,000 g/mol; (b) a viscosity between 100 $mm^2/s$ and 165,000 $mm^2/s$; and (c) a vinyl content between 0.01 mmol/g and 0.1 mmol/g. In some embodiments, the crosslinker is a (mercaptopropyl) methylsiloxane-dimethylsiloxane copolymer having a thiol content between 0.1 mmol/g and 10 mmol/g and a molecular weight between 2,000 g/mol and 20,000 g/mol. In other embodiments, the chain extender is a thiol end-capped PDMS or a thio-functional telechelic PDMS.

In yet another embodiment, a closure system including a dry silicone gel is provided. The closure or interconnect system comprises a housing, a cable, and the dry silicone gel. The dry silicone gel in the system is made by thiol-ene chemistry through the reaction of a crosslinker having thiol groups, a chain extender having thiol groups, and a base polymer having a vinyl-silicone group together in the presence of an initiator.

In some embodiments, the system further comprises a connector and receptacle for the connector. In certain embodiments, the cable in the system is an LSZH cable, and the gel is compatible with the LSZH cable as determined by a pressure loss test or tightness test following at least one of the following mechanical or environmental tests: axial tension test, flexure test, re-entry test, torsion test, resistance to aggressive media test, resistance to stress cracking test, salt fog test, temperature cycling test, and waterhead test.

In certain embodiments, the dry silicone gel has a hardness between 80 g and 300 g (24-53 Shore 000 Hardness), between 100 g and 300 g (26-53 Shore 000), or between 160 g and 220 g (37-45 Shore 000). In some embodiments, the dry silicone gel has an original size and a stress relaxation between 20% and 65%, between 30% and 60%, or between 40% and 60% when subjected to a deformation of 50% of the original size. In other embodiments, the dry silicone gel has a compression set between 4% and 20%, or between 10% and 14% after 50% strain has been applied to the gel for 1000 hours at 70°C. In certain embodiments, the dry silicone gel has less than 10% oil bleed out under compression of 1.2 atm after 60 days at 60°C.

## BRIEF DESCRIPTION OF THE FIGURES

Fig. 1 is a depiction of an interconnect system having a connection hub having multiple connection ports or receptacles for the connector, housing, and cable components to be connected.

Fig. 2 is a depiction of a connector, housing, and cable assembly with radial sealing.

Fig. 3 is a depiction of a connector, housing, and cable assembly with axial sealing.

Figs. 4a and 4b are depictions of a straight two piece housing assembly designed for axial sealing.

Figs. 5a and 5b are depictions of an angled two piece housing assembly designed for axial sealing.

Fig. 6 is a side view of a telecommunications enclosure suitable for using a sealant in accordance with the principles of the present disclosure.

Fig. 7 is an end view of the telecommunications enclosure of Fig. 6.

Fig. 8 is an exploded view of the telecommunications enclosure of Fig. 6.

Fig. 9 is a cross-sectional view taken along section line 9-9 of Fig. 7.

Fig. 10 is a cross-sectional view taken along section line 10-10 of Fig. 6.

Fig. 11 is a depiction of the viscosity of the dry silicone gel for different ratios of dithio-functional PDMS to divinyl PDMS as a function of irradiation time.

Fig. 12 is a depiction of induction time as a function of the percentage of dithio-functional PDMS.

Fig. 13 is a depiction of the final viscosity of the dry silicone gel as a function of the percentage of dithio-functional PDMS.

Fig. 14 is a depiction of the overall reaction time as a function of the percentage of dithio-functional PDMS.

Figs. 15 and 16 are depictions of the strain at break and the initial elastic modulus as a function of silica content for telechelic vinyl PDMS ($M_n$ 52100) with 0.58 equivalents of multi thiol functional PDMS. The error-bars represent the 90% confidence interval.

Fig. 17 is a depiction of an elastic moduli of the networks formed from telechelic vinyl PDMS of different molecular weight and thiol functional PDMS as a function of the molar thiol to ene ratio used to prepare the networks. The error bars represent the 90% confidence interval.

Fig. 18 is a depiction of the pentane-soluble fraction of the networks formed from telechelic vinyl PDMS ($M_n$ 61900) and thiol functional PDMS as a function of the molar thiol to ene ratio used to prepare the networks.

Fig. 19 is a depiction of the number of alpha thio-methylene protons ($CH_2S$; thiol or thioether, squares) and vinyl protons (triangles) per 5000 $SiCH_3$ protons (the average number of methyl protons per vinyl-PDMS as calculated from the triple-detection GPC-data of 3) as a function of the molar thiol to ene ratio used to prepare the networks.

Figs. 20a and 20b are depictions of viscosity and induction time (respectively) as functions of different molar ratios of telechelic dithiol PDMS to telechelic divinyl (ene) PDMS.

Fig. 21 is a depiction of the maximum reaction-rate (100*dx/dt) as a function thiol-functional telechelic PDMS $M_n$ = 3,100 with vinyl-functional PDMS $M_n$ = 33,000 with a concentration of DMPA of 11.7 $\mu$mol/g and an approximate light intensity (365 nm) of 12 mW/cm$^2$.

Figs. 22a and 22b are depictions of (a) elastic moduli of the networks formed from telechelic vinyl PDMS of different molecular weight and thiol functional PDMS as a function of the molar thiol to ene ratio (NMR) used to prepare the networks (the error bars represent the 90% confidence interval), and (b) the pentane-soluble fraction of the networks. The solid lines are drawn as a guide to the eye.

Fig. 23 is a depiction of the number of alpha thio-methylene protons ($CH_2S$; thiol or thioether) and vinyl protons per 5000 $SiCH_3$ protons as a function of the molar thiol to ene ratio used to prepare the networks.

Fig. 24 is a depiction of HRMAS NMR spectrum of a thiol-ene PDMS network prepared with initially equimolar amounts of thiol and ene moieties.

Fig. 25 is a depiction of double bond conversion as a function of the thiol to ene ratio for thiol-ene networks prepared from telechelic vinyl PDMS and thiol-functional PDMS crosslinker, using 700 MHz HRMAS and fluoride dissolution.

## DETAILED DESCRIPTION

As used herein, terms such as "typically" are not intended to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

As used herein, the terms "comprise(s)," "include(s)," "having," "has," "contain(s)," and variants thereof, are intended to be open-ended transitional phrases, terms, or words that do not preclude the possibility of additional acts or structure.

Any concentration range, percentage range, or ratio range recited herein are to be understood to include concentrations, percentages, or ratios of any integer within that range and fractions thereof, such as one tenth and one hundredth of an integer, unless otherwise indicated. Also, any number range recited herein relating to any physical feature are to be understood to include any integer within the recited range, unless otherwise indicated. It should be understood that the terms "a" and "an" as used above and elsewhere herein refer to "one or more" of the enumerated components. For example, "a" polymer refers to one polymer or a mixture comprising two or more polymers.

As used herein, the term "dry silicone gel" may refer to a chemically crosslinked polymer having a Si-O backbone and comprising a relatively low amount, or no amount at all, of diluent fluids such as silicone oil or mineral oil. As opposed to carbon-based polymers, the crosslinked silicone polymers of dry silicone gels are based on a Si-O backbone. The characteristics of silicon and oxygen provide crosslinked polymers with their exceptional properties. For example, silicon forms stable tetrahedral structures, and silicon-oxygen bonds are relatively strong which results in dry silicone gels with high temperature resistance. In addition, crosslinked Si-O polymers have a relatively high chain flexibility as well as low rotational energy barrier.

In certain embodiments, the dry silicone gel is made through the reaction of a base polymer having a Si-vinyl group with a thiol crosslinker and a thiol chain extender in the presence of an initiator. The dry silicone gel is formed through a thiol-ene chemistry reaction mechanism. These thiol-ene reactions can be induced photochemically or thermally without undesirable side reactions such as sulfenyl radical coupling.

A generalized mechanism of the radical addition thiol-ene reaction is shown below in (I). In the first step (initiation, k1), the initiator radical abstracts a hydrogen atom from a thiol molecule. The thio-radical then adds to the carbon double bond (k2), forming the highest substituted carbon-centered radical, which in turn abstracts a proton from a second thiol molecule (k3). The cycle then continues with the addition of the thio-radical to a second ene molecule (k2), etc. Termination (k4) takes place mainly by radical-radical recombination reactions leading to the formation of small amounts of mainly disulfide side-products.

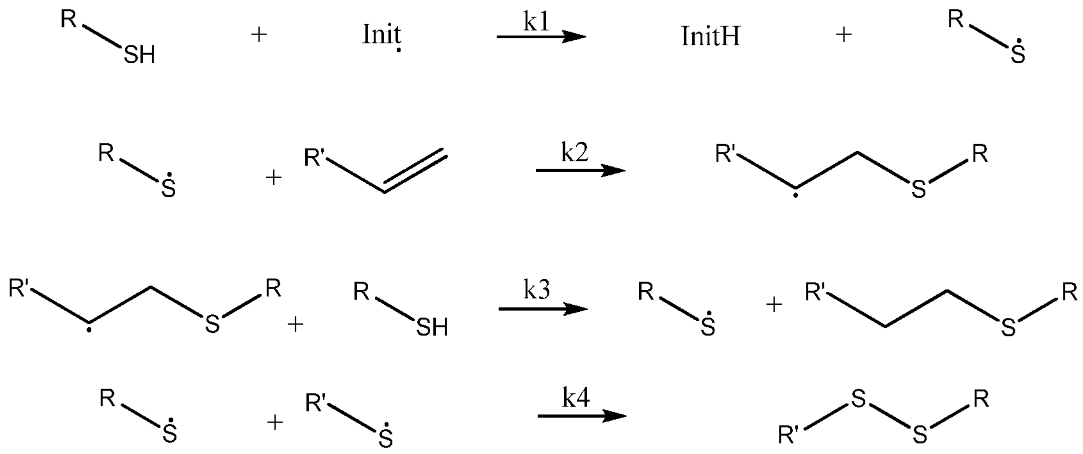


(I)

Through the use of thiol-ene chemistry, this reaction mechanism avoids use of catalysts that may poison the system or make it less stable. These reactions can be considered environmentally friendly, as they may proceed in the absence of a solvent and without the use of any potentially toxic metal. Also, the reactions are not inhibited by the whole range of materials such as trace amines, tin catalyst, and the like (e.g., platinum catalyzed hydrosilylation based curing systems). Furthermore, in the thiol-ene chemistry reaction mechanism, the components will not react and crosslink until the initiator is triggered. This may make the dry silicone gel easier and faster to process. In particular, the hardness, stress relaxation, and/or compression set properties of the silicone gel may be more readily controlled through the thiol-ene chemistry reaction mechanism than catalytic reaction mechanisms. Also, due to the fast and generally complete reaction of the radical-initiated thiol addition vinyl silicone, the curing reaction is also efficient for high molecular weight systems.

A schematic overview of the dry silicone gel formed through a thiol-ene chemistry reaction mechanism is depicted in (II) below, wherein the crosslinker compounds are represented by "+", "T", and "*" the chain extender compounds are represented by "=," and the base polymer compounds are represented by "-." In certain embodiments, the chain extender must always connect two different base polymer compounds, or connect to one base polymer and terminate the chain on the opposite end.

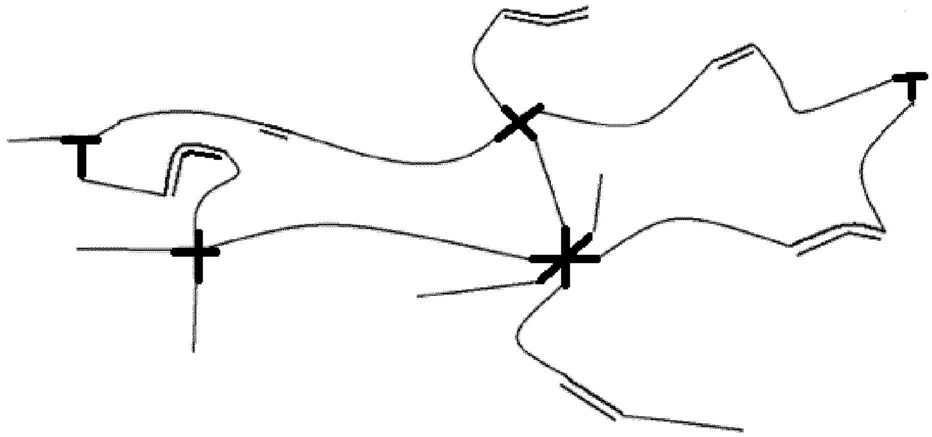

(II)

**Base polymer**

In certain embodiments, the Si-vinyl base polymer is a vinyl terminated polydimethylsiloxane (otherwise referred to as "V-PDMS" or the "ene" functional component in the thiol-ene reaction), which is shown below in (III). In this example, the base polymer compound comprises a vinyl group at each end of the compound.

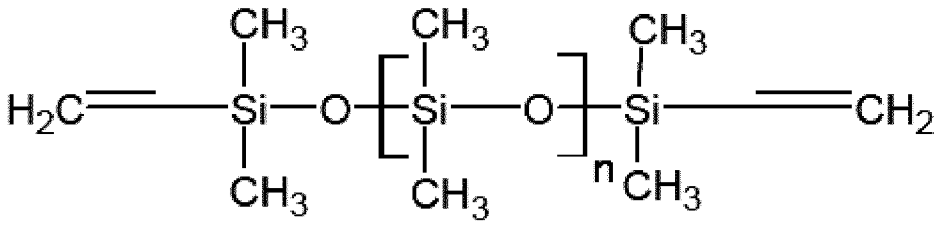

(III)

In certain embodiments, the molecular weight of the base polymer is controlled through anionic ring-opening polymerization of cyclic siloxanes in the presence of alkalimetal hydroxide of a base that is volatile (e.g., tetramethylammonium silanolate). Endcapping of the PDMS with a vinyl group is needed, so these groups are added to the polymerization mixture. V-PDMS together with the chain extender determine the molecular weight between the different crosslink sites.

The vinyl-containing base polymer, such as V-PDMS, may have different viscosities that affect the resulting dry silicone gel. In general, a high molecular weight V-PDMS will yield a pre-cure formulation with a higher viscosity. In certain embodiments, a low molecular weight V-PDMS generally improves processability. In other embodiments, the V-PDMS used in the dry silicone gel has a viscosity between approximately 100 and 165,000 cSt (100-165,000 $mm^2/s$), between approximately 1000 cSt and 50,000 cSt (1000-50,000 $mm^2/s$), between approximately 3000 cSt and 7000 cSt (3000-7000 $mm^2/s$), or between approximately 4500 cSt and 5500 cSt (4500-5500 $mm^2/s$).

In some embodiments, the vinyl-terminated polydimethylsiloxane has a molecular weight between about 5,000 g/mol and about 80,000 g/mol. In some embodiments, the vinyl-terminated polydimethylsiloxane has a molecular weight greater than about 30,000 g/mol. In other embodiments, the vinyl-terminated polydimethylsiloxane has a molecular weight between about 50,000 g/mol and about 80,000 g/mol. In yet other embodiments, the vinyl-terminated polydimethylsiloxane has a molecular weight between about 28,000 g/mol and about 72,000 g/mol. In one particular embodiment, the vinyl-terminated polydimethylsiloxane has a molecular weight of approximately 49,500 g/mol.

In certain embodiments, the base polymer contains between approximately 1 and 10 mol of vinyl per 500,000 g/mol of V-PDMS. In one embodiment, the base polymer contains approximately 2 mol of vinyl per 200,000 g/mol of V-PDMS (the vinyl end group concentration would be in the order of $10^{-5}$). In yet other embodiments, the vinyl content of the V-PDMS is between approximately 0.01 and 0.1 mmol/g, or between approximately 0.036 and 0.07 mmol/g.

Crosslinker

In certain embodiments, the thiol functionality for the thiol-ene reaction may be provided by a crosslinker and/or

a chain extender. The crosslinker and chain extender are capable of forming connections between vinyl-terminated polydimethylsiloxane chains. In certain embodiments, the crosslinker comprises functional S-H groups that are compatible and willing to react with the vinyl groups in the base polymer. The crosslinker may include two or more S-H groups. In certain embodiments, the crosslinker comprises between three and ten S-H groups that are capable of forming a connection point between three and ten different vinyl-terminated polydimethylsiloxane chains, such that the crosslinker functions as a branching agent. In another embodiment, the crosslinker comprises four S-H groups that are capable of forming a connection point between four different vinyl-terminated polydimethylsiloxane chains. In yet other embodiments, the crosslinker can function as a chain extender. In some embodiments, the crosslinker is a thio functional PDMS copolymer. In one embodiment, the crosslinker is a thiopropyl functionalized PDMS copolymer.

## Chain Extender

In addition to the crosslinker, the thiol functionality for the thiol-ene reaction may be provided by a chain extender. In certain embodiments, the chain extender comprises functional groups that are compatible and willing to react with the vinyl groups in the base polymer. In certain embodiments, the chain extender includes two S-H groups, wherein both ends of the chain extender compound are terminated with S-H groups. In some embodiments, the chain extender having two thiol functional groups (i.e., a dithiol chain extender) may be used to replace part of the multi-thiol crosslinker (e.g., 3-10 thiol groups), which can lead to the formation of a low crosslink density network with low elastic moduli as low as 0.1 MPa. The use of a dithiol chain extender may also allow for the formulation of easy processable low viscosity photo-cure elastomers.

The chain extender may be any chain extender known in the art. In certain embodiments, the chain extender is a thiol end-capped PDMS or a thiol-functional telechelic PDMS. In some embodiments, the chain extender is prepared through an equilibrium polymerization of cyclic oligomers. In one embodiment, the thiol-functional telechelic PDMS is prepared from an aliphatic dithiol such as ethane dithiol or propane dithiol. In some embodiments, the amount of chain extender added to the base polymer is targeted for a thiol to ene between 1:10 and 10:1, between 1:5 and 5:1, between 1:2 and 2:1, between 1:1.5 and 1.5:1, or approximately 1:1.

In other embodiments, as shown in the reaction mechanism below (IV), the thiol-functional telechelic PDMS is prepared from a telechelic hydroxyl-functional PDMS **(1),** by first converting the hydroxyl functions into mesylate **(2)** followed by a nucleophilic substitution with potassium thioacetate in DMF. The dithiol was obtained by treating the thioacetate **(3)** with a small excess of dry propylamine to give, after workup, the free thiol **(4)** as a slightly yellow and almost odorless oil.

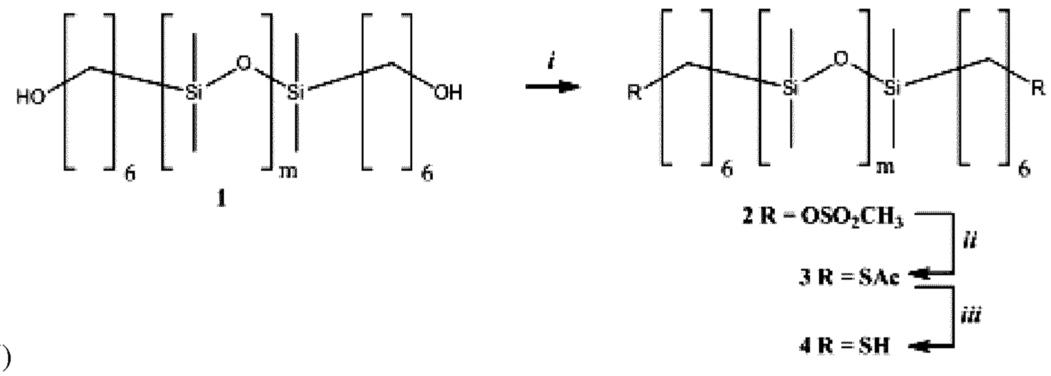


1

2 R = $OSO_2CH_3$

3 R = SAc

4 R = SH

(IV)

In this reaction mechanism: *i* = $CH_3SO_2Cl$, $NEt_3$,THF, 0°C; *ii* = KSAc, DMF, 20°C; and *iii* = n-$PrNH_2$, 0°C, where *i-iii* typically provides 95% overall yield.

In certain embodiments, by making use of the chain extender molecule, the V-PDMS base polymer can be shorter because the chain extender will extend the V-PDMS base polymer chain in situ between two crosslinker compounds. By using this mechanism, a V-PDMS chain of a shorter length can be applied which leads to lower viscosities and compounds that are easier to work with. Therefore, lower viscosity base polymer compounds can be used unlike a peroxide activated cure reaction mechanism. For example, a peroxide activated cure mechanism makes use of polymer chains with viscosities of approximately 2,000,000 cSt (2,000,000 $mm^2/s$) while the thiol-ene reaction mechanism allows for base polymer chains (V-PDMS) having viscosities of approximately 5,000 cSt (5,000 $mm^2/s$).

## Initiator

In certain embodiments, the thiol-ene chemistry reaction is carried out in the presence of an initiator. The initiator

may be a thermal initiator. In certain embodiments, the thermal initiator is a peroxide, azo-compound, or mixture thereof. In some embodiments, the thermal initiator is an azo-compound selected from the group consisting of 2,2'-azobisisobutyronitrile (AIBN), cyclohexyl analogs of AIBN, 2,2'-azobis(4-methoxy-2,4-dimethyl valeronitrile) ("V70"), and mixtures thereof. In other embodiments, the peroxide is a sterically hindered peroxide.

In certain embodiments, the initiator is a photoinitiator. The photoinitiator may be a cleavage type (Type I) photoinitiator such as 2,2-dimethoxy-2-phenylaceto-phenone (DMPA) or (2,4,6-trimethylbenzoyl) diphenylphosphine oxide (TMDPO). Additionally, the photoinitiator may be a H-abstraction type (Type II) photoinitiator such as benzophenone (BP), thioxanthone (TX), or camphorquinone (CQ). In other embodiments, the photoinitiator may be selected from one or more of the following compounds: acetophenone, anisoin, anthraquinone, benzil, benzoin, benzoin ethyl ether, benzoin isobutyl ether, benzoin methyl ether, benzophenone, benzophenone/1-hydroxycyclohexyl phenyl ketone (50/50 blend), 3,3',4,4'-benzophenonetetracarboxylic dianhydride, benzoylbiphenyl, 2-benzyl-2-(dimethylamino)-4'-morpholinobutyrophenone, 4,4'-bis(diethylamino) benzophenone, 4,4'-bis(dimethylamino) benzophenone, camphorquinone, 2-chlorothioxanthen-9-one, dibenzosuberenone, 2,2-diethoxyacetophenone, 4,4'-dihydroxybenzophenone, 4-(dimethylamino) benzophenone, 4,4'-dimethylbenzil, 2,5-dimethylbenzophenone, 3,4-dimethylbenzophenone, diphenyl(2,4,6-trimethylbenzoyl) phosphine oxide/2-hydroxy-2-methylpropiophenone (50/50 blend), 4'-ethoxyacetophenone, 2-ethylanthraquinone, 3 3'-hydroxyacetophenone, 4 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3 -methylbenzophenone, methybenzoylformate, 2-methyl-4'-(methylthio)-2-morpholinopropiophenone, phenanthrenequinone, 4'-phenoxyacetophenone (98%), and thioxanthen-9-one. In certain embodiments, DMPA provides a high extinction coefficient (surface cure), good solubility in PDMS, a fast cure (seconds), and good gel properties.

## Additives

In certain embodiments, the dry silicone gel composition may comprise additional components. For example, the dry silicone gel composition may include additives such as flame retardants, coloring agents, adhesion promoters, stabilizers, fillers, dispersants, flow improvers, plasticizers, slip agents, toughening agents, and combinations thereof.

In certain embodiments, the dry silicone gel composition comprises a toughening agent that may improve the ability for the composition to deform without breaking. In some embodiments, the toughening agent may allow the composition to be strained to approximately 800%, 1000%, or 1200% of its original size before breaking.

In certain embodiments, the toughening agent is a fumed silica. In certain embodiments, the fumed silica comprises between 0.1-30 wt% of the overall composition, 1-25 wt% of the overall composition, or 5-20 wt% of the overall composition. In some embodiments, the fumed silica is a surface-treated hydrophobized fumed silica. In one embodiment, the fumed silica is a hexamethyldisilazane treated fumed silica. One non-limiting example of a fumed silica that may be used in the dry silicone gel composition is AEROSIL® R9200 modified, hydrophobic fumed silica, available from Evonik Degussa Corp. (Parsippany, NJ, USA).

In certain embodiments, the additional additives may include at least one material selected from the group consisting of Dynasylan 40, PDM 1922, Songnox 1024, Kingnox 76, DHT-4A, Kingsorb, pigment, and mixtures thereof. In some embodiments, the additives comprise between 0.1 and 25 wt% of the overall composition, between 0.1 and 5 wt% of the overall composition, between 0.1 and 2 wt% of the overall composition, or between 0.1 and 1 wt% of the overall composition.

In some embodiments, the compositions disclosed and by methods disclosed herein comprise a flame retardant. In certain embodiments, the flame retardant is zinc oxide. In some embodiments, the flame retardant comprises between 0.1 and 25 wt% of the overall composition, between 0.1 and 5 wt% of the overall composition, between 0.1 and 2 wt% of the overall composition, or between 0.1 and 1 wt% of the overall composition. In one embodiment, the flame retardant comprises 20 wt% of the overall gel composition.

In some embodiments, the compositions disclosed and made by methods disclosed herein contain at least one stabilizer. Stabilizers include antioxidants, acid-scavengers, light and UV absorbers/stabilizers, heat stabilizers, metal deactivators, free radical scavengers, carbon black, and antifungal agents.

## Making the dry silicone gel

In certain embodiments, the dry silicone gel is prepared by mixing between 45-99.99 wt% base polymer, 0.01-5 wt% crosslinker, and 0-50 wt% chain extender together at room temperature (25°C). In some embodiments, the dry silicone gel is prepared by mixing between 90-99.9 wt% base polymer, 0.1-5 wt% crosslinker, and 0.01-5 wt% chain extender together. In other embodiments, the dry silicone gel is prepared by mixing between 95-99.9 wt% base polymer, 0.05-2 wt% crosslinker, and 0.1-3 wt% chain extender together. In yet other embodiments, the dry silicone gel is prepared by mixing between 98.5-99.5 wt% base polymer, 0.1-0.5 wt% crosslinker, and 0.1-1 wt% chain extender together.

In certain embodiments, the dry silicone gel comprises a thiol to ene ratio between 1:10 and 10:1, between 1:5

and 5:1, between 1:2 and 2:1, between 1:1.5 and 1.5:1, or approximately 1:1.

In certain embodiments, an additive or additives may also be added to the base polymer, crosslinker, and chain extender. In certain embodiments, the additive may comprise between 1-30 wt% of the overall composition, 1-25 wt% of the overall composition, or 5-20 wt% of the overall composition.

An initiator may be added to the dry silicone gel components. In certain embodiments, approximately 0.001-10 parts by weight, 0.05-5 parts by weight, or 0.1-1 parts by weight initiator can be blended with the dry silicone gel components (base polymer, crosslinker, and chain extender).

When the initiator is a thermal initiator, the thiol-ene chemistry reaction mechanism is triggered by the addition of heat. In some embodiments, the dry silicone gel components are heated to 50°C-100°C, 70-90°C, or 75-85°C and held at temperature for 1-12 hours, 2-8 hours, or 3-6 hours. In other embodiments, the thermal initiator, such as V70, may be triggered at or near room temperature (25°C). The temperature and time at temperature may be adjusted accordingly to target the end properties desired in the dry silicone gel. Several of those properties are discussed in the section below labeled "Uses and Properties of the Dry Silicone Gel."

When the initiator is a photoinitiator, the thiol-ene chemistry reaction mechanism is triggered by the addition of ultraviolet (UV) light. In certain embodiments, the wavelength of the UV light is between 10-500 nm, 200-400 nm, or 300-400 nm. The light intensity of the UV light may be between 0.1-20 mW/cm$^2$, 0.5-10 mW/cm$^2$, or 1-5 mW/cm$^2$. In certain embodiments, the temperature for the reaction mechanism is approximately room temperature (25°C). The wavelength and intensity of the UV light may be adjusted accordingly to target the end properties desired in the dry silicone gel. In certain embodiments, the photoinitiator is added into a solution of diethylether. Preferably, only a minimal amount of solvent is needed to dissolve the material (e.g., usually less than 0.2% by weight of the total formulation). In some embodiments, before application to the mold, high-vacuum (-0.1 Torr) is applied to remove the small amount of solvent (e.g., ether) together with any air bubbles trapped in the formulation.

Several of those properties are discussed in the section below labeled "Uses and Properties of the Dry Silicone Gel."

**Uses and Properties of the Dry Silicone Gel**

The present invention is limited to a closure or interconnect system as claimed; but other uses can be recognized. The dry silicone gels described herein may be used in a number of end uses due to their improved properties (e.g., shape memory properties), such as improved behavior in mechanical stresses (e.g., vibration and shock) or ability to seal uneven or complicated structures (due to the ability to flow and adapt to the area of the structure). In certain embodiments, the dry silicone gels may be used in an interconnect, cover, or closure system. In particular, the dry silicone gel may be used in a fiber optic closure, electrical sealant, or electrical closure. In some embodiments, the dry silicone gels are used as gel wraps, clamshells, or gel caps. In further embodiments, the dry silicone gels are used in the inside of a residence. In other embodiments, the dry silicone gels are used outside of a residence. In yet other embodiments, the dry silicone gels are used as shape memory materials in medical or dental applications. In certain embodiments, the dry silicone gels are used in the preparation of low gas permeability membranes, sealants, stamps for lithography, degradable polymeric structures for biomedical application, liquid crystalline compositions for optical applications, and polymer electrolytes (for batteries). Use of the dry silicone gel within a closure or interconnect system may allow for a reduction in the number of components, frame size, or cost over other sealing mechanisms.

In certain embodiments, the dry silicone gel is used as a flame retardant sealant. In one embodiment, the dry silicone gel comprises a flame retardant additive (e.g., zinc oxide) in order to function as a flame retardant sealant.

In certain embodiments, the dry silicone gel is used in a closure system. In certain embodiments, the closure system comprises a housing, a cable, and a dry silicone gel. In some embodiments, the cable is a LSZH cable.

In some embodiment, the system further comprises a connector, and, in some instances, a receptacle or port, therein forming an interconnect system. The interconnect system may comprise a mini input/output connector, data connector, power connector, fiber optic connector, or combination thereof. For example, the interconnect system may comprise a RJ-45 connector system. Non-limiting examples of interconnect systems and components are displayed in FIGS. 1, 2, 3, 4a, 4b, 5a, and 5b.

The dry silicone gel may be used to create a seal formed by displacement. In other embodiments, the dry silicone gel may be used to create a seal having radial functionality, axial functionality, or a combination thereof. In yet other embodiments, the dry silicone gel may be used to create a seal formed by displacement and having radial and/or axial functionality.

FIGS. 1, 2, and 3 provide non-limiting examples of radial and axial functionality. FIG. 1 displays an example of a connection hub having multiple connection receptacles or ports for the cables 16 within the housings 14 to be connected. FIG. 1 displays both radial connection ports 10 and axial connection ports 12. FIG. 2 displays a connector 26; housing 18, 28; and cable 16 assembly with radial sealing 22. FIG. 3 displays a connector 26; housing 32, 34; and cable 16 assembly with axial sealing 30, wherein the seal follows the surface of the axial port 12. In certain embodiments, the

housing may have a knob 20 that may be pushed inward to engage the latch 24 on the connector 26, allowing the connector to be removed from the port.

In certain embodiments, the gel may be used to create a seal in a housing assembly having multiple parts. For example, in one embodiment the gel may be used in a straight two-piece housing assembly, as shown in FIGS. 4a and 4b. Similar to FIG. 3, FIGS. 4a and 4b display a two-piece housing 32, 34, having axial sealing 30, wherein the seal follows the surface of the axial port 12 (as shown in FIG. 1). In certain embodiments, the housing may have a knob 20 that may be pushed inward to engage the latch 24 (as shown in FIG. 3) on the connector 26 (as shown in FIG. 3), allowing the connector to be removed from the port.

In another embodiment, the gel may be used in an angled two-piece housing assembly, as shown in FIGS. 5a and 5b. FIGS. 5a and 5b display a connector 26; angled two-piece housing 36, 38; and cable 16 assembly with axial sealing 30, wherein the seal follows the surface of the axial port 12 (as shown in FIG. 1). In certain embodiments, the housing may have a knob 20 that may be pushed inward to engage the latch 24 on the connector 26, allowing the connector to be removed from the port.

The dry silicone gel may be sealed around the cable 16 by sliding a smaller diameter gel formation over the cable to create a seal through interference. In other embodiments, the seal may be created by molding the dry silicone gel around the inside of the housing components and then snapping the housing, gel, and cable into place.

In some embodiments, the dry silicone gel is used in a closure or interconnect system that is "compatible" with a low smoke zero halogen (LSZH) cable. In certain embodiments, compatibility is measured by subjecting the sample to one or more mechanical or environmental tests to test for certain functional requirements. In some embodiments, compatibility is measured by passing a pressure loss test, tightness test, and/or visual appearance test. In certain embodiments, the dry silicone gel in the closure or interconnect system is compatible where a traditional thermoplastic elastomer gel would fail (as shown and described in the examples and figures).

In certain embodiments, the gel is used as a sealant in a telecommunications enclosure. Non-limiting examples of telecommunications enclosures are shown in FIGS. 6-10.

FIGS. 6-8 show a telecommunications enclosure 120 suitable for using a sealing material in accordance with the principles of the present disclosure. The enclosure 120 includes a housing 122 having an end 124 defining a sealing unit opening 126. The sealing unit opening 126 is defined by a base 127 of the enclosure 120. The base 127 has a hollow sleeve-like configuration. A dome-style cover 129 is secured to the base 127 by a channel clamp 125. The enclosure 120 also includes a sealing unit 128 (see FIGS. 8-10) that fits within the sealing unit opening 126. The sealing unit 128 includes a sealant arrangement 132 (see FIGS. 9 and 10) defining a plurality of cable ports 130. The sealant arrangement can include a material having stress-strain characteristics in accordance with the principles of the present disclosure. In certain embodiments, the sealant arrangement can include a hybrid gel of the type disclosed herein. When pressurized, the sealant arrangement 132 is configured for providing seals about structures (e.g., cables, plugs, etc.) routed though the cable ports 130 and is also configured for providing a peripheral seal with the housing 122. The enclosure 120 further includes an actuation arrangement 131 (see FIG. 9) for pressurizing the sealant arrangement 132 within the sealing unit opening 126. In other embodiments, the housing can be an enclosure (e.g., an aerial enclosure) having a pass-through configuration with sealing units located at opposite ends of the enclosure. In certain embodiments, a frame supporting optical components (e.g., optical splices, optical splitters, optical splice trays, optical splitter trays, fiber management trays, passive optical splitters, wavelength division multi-plexers, etc.) can be mounted within the enclosure 120.

Referring to FIG. 9, the actuation arrangement 131 includes inner and outer pressurization structures 160, 162 (e.g., plates, members, bodies, etc.). The sealant arrangement 132 is positioned between the inner and outer pressurization structures 160, 162. The actuation arrangement 131 also includes a threaded shaft 149 that extends between the inner and outer pressurization structures 160, 162 and a nut 151 that is threaded on the threaded shaft 149. The actuation arrangement further includes a spring 152 for transferring a seal pressurization force to the sealant arrangement 132. The spring 152 is captured between the nut 151 and the outer pressurization structure 162. An extension 153 (e.g., a wrench or other tool) is used to turn the nut 151 a first rotational direction (e.g., clockwise) on the threaded shaft 149 causing the spring 152 to be compressed between the nut 151 and the outer pressurization structure. As the spring 152 is compressed, the threaded shaft 149 is tensioned and the inner and outer pressurization structures 160, 162 are drawn together. As the inner and outer pressurizations structures 160, 162 are drawn together, the sealant arrangement 132 is pressurized between the pressurization structures 160, 162 causing the sealant arrangement 132 to flow/deform to fill voids within the sealing unit opening 126, to form the peripheral seal with the housing 122, and to form seals around any cables or inserts positioned within cable ports 130. Thus, when the actuation arrangement 131 is actuated, the first and second pressurization plates 60, 62 are spring biased toward one another such that spring pressure is applied through the sealant arrangement 132 for pressurizing the sealant arrangement 132 to maintain effective sealing over an extended period of time. In other embodiments, different actuation configurations can be used. The sealant arrangement 132 can be de-pressurized by turning the nut 151 a second rotational direction (e.g., counterclockwise) on the shaft 149 to decompress the spring 152.

Referring to FIGS. 9 and 10, two cables 180 are shown passing through the cable ports 130 while the remainder of the cable ports 130 are shown blocked with plugs. The cables 180 include outer jackets 182 containing a plurality of buffer tubes 184. A plurality of optical fibers 186 are contained in each of the buffer tubes 184. The cables 180 also include center strength members 188 (e.g., fiberglass reinforced epoxy rods) that provide the cables with tensile and compressive reinforcement. In other embodiments, reinforcing members in the form aramid yarns or other reinforcing structures can be used. In certain embodiments, the cables 180 can be LSZH cables and the outer jackets include EVA. When pressurized, the sealant arrangement 132 contacts the outer jackets 182 and forms cable seals 190 around peripheries of the cable jackets 182. When pressurized, the sealant arrangement 132 also contacts an interior of the base 127 to form a peripheral seal 192 with the base 127. Cables having alternative constructions (e.g., flat drop cables, cables without buffer tubes, cables without center strength members, etc.) can also be used.

Tightness may be tested under International Electrotechnical Commission (IEC) Test 61300-2-38, Method A and IEC 60068-2-17, Test Qc. In certain embodiments, tightness is tested by immersing the specimen in a water bath and using an internal pressure of 20-40 kPa (0.2-0.4 atm) for 15 minutes. It is important that tightness is measured directly after installing the closure at a temperature of -15°C or 45°C. It is also important that all the air bubbles present on the outside of the closure are removed. If a continuous stream of air bubbles is observed, this means the specimen is not properly sealed and it will be considered as a failure (i.e., not compatible).

Pressure loss may be tested under IEC 61300-2-38, Method B. In certain embodiments, the gel and cable are compatible if the difference in pressure before and after the test is less than 2 kPa (0.02 atm).

Visual appearance may be tested under IEC 61330-3-1 by examination of the product with the naked eye for defects that could adversely affect the product performance.

The sample may be subjected to various mechanical and/or environmental conditions prior to testing tightness, pressure loss, visual appearance, etc. In certain embodiments, compatibility is determined by subjecting the sample to one or more of the following mechanical tests: axial tension test, flexure test, re-entry test, and torsion test, and/or one or more environmental tests: resistance to aggressive media test, resistance to stress cracking test, salt fog test, temperature cycling test, and waterhead test.

In certain embodiments, the sample is subjected to an axial tension test according to IEC 61300-2-4. In this test, the sample may be pressured internally at 20 kPa (0.2 atm) or 40 kPa (0.4 atm) at room temperature and sealed. The base assembly is clamped and a force is applied to each of the extending cables individually. If the sample has an outer diameter of less than or equal to 7 mm, then the amount of force per cable applied is equal to (outer diameter/45 mm) * 500 Newtons ("N"). This force is applied for 15 minutes for each cable and built up to the IEC 61300-2-4 test. If the sample has an outer diameter of greater than 7 mm, then the amount of force per cable applied is equal to (outer diameter/45 mm) * 1000 N, with a maximum of 1000 N applied. This force is applied for one hour. Internal pressure is then examined for pressure loss. In certain embodiments, the gel and cable are compatible if the pressure loss is less than 2 kPa (0.02 atm). In addition, in certain embodiments, the gel and cable are compatible if the displacement of the cable is less than 3 mm. In other embodiments, the specimens are further subjected to the tightness test, previously described.

In other embodiments, compatibility is measured by subjecting the sample to a flexure test according to IEC 61300-2-37. In this test, the samples are subjected to temperatures of -15°C and 45°C. Samples are pressured internally at 20 kPa or 40 kPa (0.2 atm or 0.4 atm) and sealed. Cables are bent individually at an angle of 30° (or a maximum force application of 500 N) each side of neutral in the same plane. Each bending operation is held for 5 minutes. The cable is returned to its original position and then the procedure is repeated in the opposite direction. After 5 cycles on each cable, the samples are visually inspected by the naked eye for appearance, conditioned at room temperature, and subjected to a tightness test. In some embodiments, the gel and LSZH cable are compatible if the specimen passes the visual appearance test, pressure loss test (i.e., less than 2 kPa (0.02 atm)), and/or tightness test.

In another embodiment, compatibility is measured by subjecting the sample to a re-entry test according to IEC 61300-2-33. In certain embodiments, re-entry can be simulated after a certain time of temperature cycling. To complete this test, the closure has to be removed from the cycling room and tested on tightness. After this a reentry test can be done. In this test, a dummy plug or cable is removed from the closure and another cable or dummy plug is added. Then, tightness is measured again. Re-entry is successful if the closure passes the tightness test again.

Another mechanical test may be employed to determine compatibility. The sample may be subjected to a torsion test according to IEC 61300-2-5. After completion of the torsion test, the gel and cable may be considered compatible if the sample passes the visual inspection test, pressure loss test, and/or tightness test.

In yet other embodiments, compatibility is measured by conducting an environmental test of temperature cycling or accelerated aging under IEC 61300-2-22 and IEC 60068-2-14, Test Nb. In one embodiment, the temperature cycling test is conducted on the cable jacket between the gel blocks by cycling the temperature between -40°C and 70°C for 10 days at two cycles between the extreme temperatures per day. In some embodiments, the humidity is uncontrolled, the dwell time is four hours, and the transition time is two hours. In certain embodiments, the cable jacket is tested for maintenance of tensile strength, ultimate elongation, tightness, visual appearance, and/or re-entry. Also, in certain

embodiments, after the temperature cycling test, tightness of the closures needs to be tested after being conditioned to room temperature for a minimum of 2 hours. Therefore, in certain embodiments, the gel and LSZH cable are compatible if the specimen passes the tightness test.

In another embodiment, compatibility is determined by subjecting the sample to a resistance to aggressive media test under IEC 61300-2-34, ISO 1998/1, and EN 590. The sample is considered compatible if it subsequently passes the tightness and/or appearance test.

In yet another embodiment, compatibility is determined by subjecting the sample to a resistance to stress cracking test under IEC 61300-2-34. The sample is considered compatible if it subsequently passes the tightness test and/or shows no visible signs of cracking.

In other embodiments, compatibility is determined by subjecting the sample to a salt fog test under IEC 61300-2-36 and IEC 60068-2-11, Test Ka. The sample is considered compatible if it subsequently passes the tightness and/or appearance test.

In some embodiments, compatibility is determined by subjecting the sample to a waterhead test under IEC 61300-2-23, Method 2. The sample is considered compatible if there is no water ingress.

In certain embodiments, the dry silicone gel has measurable properties. For example, in some embodiments, the dry silicone gel has a hardness in the range of 24 to 53 Shore 000 Hardness (80 to 300 g) or 26 to 53 Shore 000 Hardness (100 to 300 g), as measured according to methods known in the art. In certain embodiments, the shore hardness gauge is measured according to ISO868 or ASTM D2240. In other embodiments, hardness can be measured on a texture analyzer. For example, a LFRA Texture Analyzer-Brookfield may include a probe assembly fixed to a motor driven, bi-directional load cell. In such a system, the probe is driven vertically into the sample at a pre-set speed and to a pre-set depth. The hardness is the amount of force needed to push the probe into the test sample. In other embodiments, the dry silicone gel has a hardness in the range of 37 to 45 Shore 000, or 160 to 220 g. In yet other embodiments, the dry silicone gel has a hardness in the range of 38 to 42 Shore 000, or 170 to 200 g.

For further example, in some embodiments, the compression set, as measured after 50% strain is applied for 1000 hours at 70°C, has a range between 4% and 20%. In other embodiments, the compression set, as measured after 50% strain is applied for 1000 hours at 70°C, has a range between 10% and 14% when measured according to the modified version of ASTM D395, method B described above.

In some embodiments, the gel is compressed with a certain strain or deformation (e.g., in certain embodiments, to 50% of its original size). This causes a certain stress in the material. The stress is now reduced because the material relaxes. In certain embodiments, the stress relaxation of the dry silicone gel has a possible range between 20 and 65% when subjected to a tensile strain or deformation of about 50% of the gel's original size, wherein the stress relaxation is measured after a one minute hold time at 50% strain. In other embodiments, the stress relaxation of the dry silicone gel is between 30% and 60% when subjected to a tensile strain of about 50%. In yet other embodiments, the stress relaxation of the dry silicone gel is between 40% and 60% when subjected to a tensile strain of about 50%. A higher stress relaxation indicates that once a gel is installed in a closure, the gel will require less stress in order for it to seal.

In certain embodiments, the dry silicone gel composition has less than 10% oil bleed out over a period of time when the gel is under compression of 120 kPa (1.2 atm) at 60°C. In certain embodiments, oil bleed out is measured on a wire mesh, wherein the oil loss may exit the gel through the mesh. The weight of the gel sample is recorded before and after the pressure has been applied. In some embodiments, the gel has less than 8% oil bleed out over the period of time. In other embodiments, the gel has less than 6% oil bleed out over the period of time. In certain embodiments, the oil loss is measured at 200 hours, 400 hours, 600 hours, 800 hours, 1000 hours, 1200 hours, or 1440 hours (60 days).

In certain embodiments, the dry silicone gel has less oil bleed out in comparison to a thermoplastic gel over the same period of time at 120 kPa (1.2 atm) at 60°C. In some embodiments, the dry silicone gel has 40%, 50%, or 60% oil bleed out than the thermoplastic gel at 200 hours, 400 hours, 600 hours, 800 hours, 1000 hours, 1200 hours, or 1440 hours (60 days).

## EXAMPLES

In Examples 1-3, dry silicone gels were synthesized according to the following procedures.

### Example 1

A medium molecular weight telechelic vinyl-functional PDMS ($M_n$ 15,700) was reacted with tenfold excess ethane dithiol. The reaction was performed under irradiation in a reaction chamber fitted with ten 15W 350 nm fluorescent UV-bulbs (blacklights) in the presence of 3 mg/ml 2,2-dimethoxy-2-phenylacetophenone (DMPA) under an argon atmosphere in a quartz irradiation vessel. Tetrahydrofuran (THF) was added to the point that the reaction-mixture became homogeneous. After irradiation for two hours, the THF was removed under vacuum and the excess ethane dithiol was removed by vacuum-stripping at 0.1 mm H and 100°C.

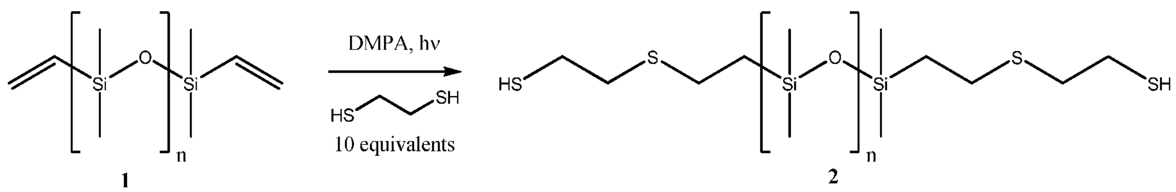


1

2

The dithiol was obtained as a colorless and almost odorless oil. GPC analysis showed a number average molecular weight $M_n$ of 28,800 and a polydispersity of 1.57. $^1$H-NMR showed the complete disappearance of the vinyl signals typical for vinyl-substituted PDMS. In order to assess the speed and efficiency of thiol-ene coupling of thiol and ene functional PDMS, the prepared dithiol was combined with the vinyl-substituted PDMS in different ratios with the addition of 1 mg/g of photo initiator (DMPA). During irradiation of 5 g aliquots in the previously described irradiation setup, the viscosity was measured as a function of irradiation time, using a Brookfield viscometer (see FIG. 11).

The thiol-ene PDMS chain-extension reaction shows a decrease in induction time with an increase in dithiol content (FIG. 12). Dissolved oxygen, which acts as an inhibitor by converting carbon-centered radicals into peroxy-radicals, is probably consumed at a faster rate with increased thiol concentration due to transfer from the peroxy-radical to the thiol, which re-activates the "dead" peroxy-radical, thus increasing the overall concentration of radicals and thereby the consumption of oxygen. The viscosity of the final product obtained after photo polymerization highly depends on the ratio of thiol to ene functional PDMS, as can be expected for an efficient linking reaction (FIG. 13). At a 1:1 ratio (50% dithiol) the viscosity of the final product was so high that it could not be measured with the applied Brookfield viscometer (upper-limit of $2.2 \times 10^6$ cPs). However at this 1:1 ratio, the maximum measurable viscosity translates into an approximate minimum reached molecular weight $M_n$ of 190,000, using the Barry's equation, which means that on average at least 12 PDMS units of $M_n$ 15,700 were linked to a single chain. In FIG. 14, the overall reaction time, measured for the different thiol to ene ratios, shows a maximum of around 50 seconds at 50% dithiol content, while the off-equimolar ratio's all show faster reactions. The increasingly high molecular weight that is reached, when approaching equimolar conditions, will lead to an increase in viscosity (as shown in FIG. 13) and therefore a decrease in mobility of the polymer chains. Low chain-mobility will slow down the reaction leading to a longer overall reaction time. In addition, non-equimolar conditions means that one of the two reactants is in excess, increasing the reaction rate (provided the reaction rate is dependent on both the thiol and ene concentration).

As was shown with linear thiol and ene functional PDMS, photo-initiated thiol-ene chemistry can be applied to efficiently link different PDMS molecules. A logical extension to the concept is to use of a multifunctional thiol, leading to a crosslinked network instead of just higher molecular weight PDMS. In Table 1, the molecular weights of the different vinyl functional and thiol functional PDMS materials are given. The values were obtained by triple-detection GPC, which combines a refractive-index detector with an online viscometer and a light scatter detector. Using this combination of three detectors, an absolute value for $M_n$ and $M_w$ can be obtained, without the need for calibration standards. The obtained $M_n$ values significantly deviate from the $M_n$ values provided by the suppliers. In addition the polydispersity can vary to quite a large extent (between 1.5 and 2.5). In order to keep the variability within the experiments as low as possible just one batch of thiol-functional PDMS was used for all further experiments. Thiol content was determined by $^1$H NMR. For all thiol functional PDMS a similar thiol content (3.9-4.2 mol %) was found.

Initially only molecular weight data as provided by the supplier was available. This data was therefore used to calculate the optimal ratios of the thiol-functional PDMS to the other vinyl functional PDMS components, later the true molecular weights were used to correct the previously used results.

**Table** 1. Absolute molecular weight and polydispersity of the PDMS-based polymers, obtained by triple detection-GPC. Bold numbers denote materials used in this study, other numbers were used as reference

| | *Mn (g/mol) indicated by supplier* | *$M_n$ (g/mol)* | *$M_w$ (g/mol)* | *Polydispersity (PDI)* | *thiol content (mol %) indicated by supplier* | *thiol content (mol %) (from NMR)* |
|---|---|---|---|---|---|---|
| 1000 cSt vinyl PDMS (1) | 28000 | 15700 | 39200 | 2.49 | - | - |
| 5000 cSt vinyl PDMS (2) | 49500 | 52100 | 85000 | 1.63 | - | - |

(continued)

| | Mn (g/mol) indicated by supplier | $M_n$ (g/mol) | $M_w$ (g/mol) | Polydispersity (PDI) | thiol content (mol %) indicated by supplier | thiol content (mol %) (from NMR) |
|---|---|---|---|---|---|---|
| 10000 cSt vinyl PDMS (3) | 62700 | 61900 | 98500 | 1.59 | - | - |
| Thiol-functional PDMS (4) | 6000-8000 | 6800 | 18800 | 2.76 | 4-6 | 3.86 |
| Thiol-functional PDMS (5) | 6000-8000 | 9770 | 19700 | 2.07 | 4-6 | 3.86 |
| Thiol-functional PDMS (6) | 6000-8000 | 8570 | 18600 | 2.17 | 4-6 | 3.87 |
| Thiol-functional PDMS (7) | 6000-8000 | 16200 | 32000 | 1.97 | 4-6 | 4.25 |

## Example 2

In this example, a multi thiol functional PDMS was formed using a ratio of thiol to ene of 0.58, which translates to a 1:1 ratio when the suppliers data is used. This means that the formulations will be slightly under-cured due to the relatively low amount of crosslinker. Cured samples were subsequently subjected to a tensile test to establish the relationship between the amount of silica (surface-modified fumed silica, Degussa R9200), the strain at break, and the elastic modulus.

Addition of silica increases the strain at break significantly. The increase is almost linear with the amount of silica added. However, this increase is only significant when more than 5 % m/m is added (FIG. 15). In addition to the increase in strain at break, an increase in elastic modulus is observed as well (FIG. 16).

Since a significant increase in elastic modulus is undesirable, and an increase in strain at break is very important for the final application (cable-enclosures), a trade-off needs to be made between strain at break and modulus. In certain embodiments, 10 wt% of silica seems to combine a reasonable value for both (-900% strain and ~ 30 kPa E-modulus). Therefore, 10 wt% of silica was added in all additional experiments.

## Example 3

In order to assess the influence of the thiol to ene ratio and the molecular weight on the Gel properties, a series of cured samples, using different thiol to ene ratios and different molecular weight telechelic vinyl functional PDMS, was prepared and subjected to a tensile test.

The moduli vary strongly with the thiol to ene ratios (FIG. 17). For the lowest molecular weight vinyl PDMS, a maximum in the E-modulus is found at a ratio of 1, which corresponds to the stoichiometric ratio. However, for the two higher molecular weight PDMS-materials, this ratio is closer to 1.7, which indicates that not all ene is able to react with the thiol.

Apart from the molecular weight, the difference in polydispersity of the lower molecular weight vinyl PDMS sample could play a role in this obvious difference in curing behavior. The presence of low molecular weight material in this high polydispersity sample will make it easier to have full conversion at a 1:1 thiol to ene ratio due to the reduction of sterical and mobility restrictions that will be more of influence in the more mono disperse and higher molecular weight samples. The amount of extractable material (pentane soluble fraction) per unit of cured material (FIG. 18) follows a similar trend as compared to the elastic modulus data in FIG. 17. The low molecular weight vinyl PDMS shows a minimum in extractable material at a thiol to ene ratio of 1, while the higher molecular weight samples show a minimum at a ratio of 1.5.

Although the maximum in E-modulus and the minimum in the extractable material (pentane soluble fraction) per unit of cured material are at a similar value of thiol to ene ratio, there is a small but significant difference for the

higher molecular weight samples (1.7 versus 1.5). It is therefore interesting to have a closer look at the highest molecular weight sample with regard to the identity of the extracted material using NMR characterization. Two different sets of protons are of significance in the characterization of the extracted material: the unsaturated vinyl protons and the alpha thio methylene units in both the thiol and the thio-ether moieties. In FIG. 19, the number of protons (normalized to the number of protons present on average in a single vinyl PDMS molecule) of each set are plotted as a function of the thiol to ene ratio. The vinyl protons decrease in intensity with an increasing thiol to ene ratio. At a ratio of 1.6 the number has become equal to zero. The thiol/thioether signal on the other hand first decreases to zero at a ratio of 1.4 and increases steeply at higher ratios.

The highest modulus is to be expected for the most dense network, i.e. a network with as little dangling ends and uncured vinyl-silicone (the highest molecular weight component). From the NMR data it is clear that an optimum in vinyl-cure is only reached at a thiol to ene ratio of at least 1.6. The extraction data shows that there is hardly any increase in extractable fraction beyond a thiol to ene ratio of 1.5, while the NMR thiol/thioether signal steadily increases beyond this point. This means that the beyond a ratio of 1.5 the main extractable material becomes thiol-functional PDMS and oligomers thereof.

The dry silicone gels may be tested in a number of ways, such as temperature cycling, re-entry test, French water cycling, cold and hot installations, and kerosene exposure. For temperature cycling experiments, closures including dry silicone gels are exposed to temperatures between -30°C and +60°C for 10 days. Humidity is typically not controlled. The closures are cycled between the high and low temperatures two times a day for ten days. Samples are maintained at the extreme temperatures for four hours during each cycle.

For combined temperature cycling tests, dry silicone gels are installed in three closure systems. After installation, the closures are tested on tightness and put into temperature cycling. After eight days, a re-entry test is performed, and after ten days, the closures are taken out of cycling and tested on tightness and re-entry. Closures containing the standard thermoplastic gels are also tested.

For tightness testing, the closure is immersed in a water bath for 15 minutes and an internal pressure of 20 kPa. If air bubbles are observed, this means the closure is not properly sealed and it will be considered as a failure.

For re-entry testing, a dummy plug or cable is removed from the closure and another cable or dummy plug is added. Then, tightness is measured again. Re-entry is successful if the closure passes the tightness test again.

In certain embodiments, the dry silicone gel in the closure system may be able to pass the tightness and re-entry tests where a traditional thermoplastic elastomer gel would fail.

## Examples 4-7

In Examples 4-7, dry silicone gels were synthesized or tested according to the following procedures.

### Instrumentation

Nuclear magnetic resonance spectra were recorded on a Bruker Avance 300, a Bruker DRX 500, or a Bruker Avance II 700 spectrometer at room temperature. Tensile testing was performed on a Tinus-Olsen H10KT tensile tester equipped with a 100 N load cell, using cylindrical specimen with an effective gage length of 25 mm, and a diameter of 4.5 mm. The tensile tests were run at a speed of 10 mm/min. Test specimens were prepared by filling 1 ml polypropylene syringes with photo-curable formulation and photo-curing them at an approximate light intensity (365 nm) of 12 $mW/cm^2$ in a Metalight Classic irradiation chamber for 5 minutes, resulting in reproducible cylindrical specimens. Triple detection GPC was performed on a PL GPC50plus (pump + 5 detectors). The 5 detectors are a low angle light scatter detector at 15°, a right angle light scatter detector at 90°, a viscometer, a refractive index detector, and a UV Knauer Wellchrom Spectro-Photometer K-2501. The GPC system was further fitted with two PLgel 5 μm MIXED-D columns and a PL AS RT autosampler. Viscosity was measured using a Brookfield DVII viscometer fitted with a LV4 spindle and a PC10/k8047datalogger.

### HRMAS NMR

NMR samples were prepared as follows. Dry material was cut in small pieces and put in a 4 mm rotor (80 (μl). Next, solvent ($CDCl_3$) was added to allow the material to swell. This removes most of the dipolar line broadening typically associated with the solid state, while residual line broadening caused by susceptibility differences can be handled by spinning at the magic angle. The sample was homogenized by stirring within the rotor. The 1H NMR spectra were recorded on a Bruker Avance II 700 spectrometer (700.13 MHz) using an hr-MAS probe equipped with a 1H, 13C, 119Sn and gradient channel. Samples were spun at a rate of 6 kHz. To characterize the gels, ID 1H spectra were recorded. The spectra were measured with an acquisition time of 1.136s in which 32768 fid points were obtained, leading to a spectral width of 20.6 ppm. For qualitative analysis, 8 transients were summed up with a recycle delay of 2s. For

quantification, 32 scans were used with 30s recycling delay to guarantee full relaxation of the signal.

**Materials**

Vinyl terminated polydimethylsiloxane and poly(dimethylsiloxane -co-methylmercaptopropylsiloxane) were obtained from ABCR, hydroxyhexyl-terminated polydimethylsiloxane (Tegomer H-Si 2311) was obtained as sample from Evonik. Tetrahydrofuran (THF, Aldrich, HPLC grade), anhydrous dimethylformamide (Aldrich, 99.8%), anhydrous toluene (Aldrich, 99.8%), mesylchloride (Acros Organics, 99.5%), propylamine (Aldrich, 98%), potassium hydroxide (Aldrich, 90%), and thioacetic acid (Aldrich, 96%) were used as received. Triethylamine (Aldrich, 99%) was distilled from calciumhydride prior to use.

**Example 4 - Formation of Methylsulfonyl-terminated telechelic polydimethylsiloxane**

Hydroxy-terminated polydimethylsiloxane (1, 100g, 34.5 mmol) was dissolved in dry toluene (100 ml) and evaporated under a nitrogen atmosphere to remove traces of water. Then, dry THF was added (200 ml) and the mixture was brought under argon and cooled to 0°C. Dry triethylamine (10.6 ml, 76 mmol) was added followed by a drop-wise addition of mesylchloride (5.9 ml, 76 mmol,) under vigorous stirring. The stirring was continued for 30 minutes at 0°C and another 4 hours at room temperature. The reaction mixture was then diluted with diethyl ether (200 ml), washed with brine (2x200 ml), dried on anhydrous magnesium sulfate and concentrated in vacuo, to yield a clear colorless viscous liquid (106.6 g, 100%) 1H NMR (300 MHz, $CDCl_3$, ppm) 4.15 (d, $CH_2OMs$), 3.41 (q, $CH_2CH_2OMs$), 2.92 (s, $CH_3SO_2$), 1.68 (m, γ- $CH_2$), 1.2-1.3 (m, δ- and ε- $CH_2$), 0.46 (broad t, $CH_2Si$), 0.00 (s, $(CH_3)_2Si(OR)_2$), -0.03 (s, $(CH_3)_2Si(CH_2)(OR)$).

**Example 5 - Formation of Thioacetyl-terminated telechelic polydimethylsiloxane**

To a stirred solution of thioacetic acid (5.4 ml, 76 mmol) in dimethylformamide (500 ml), potassium hydroxide (4.26g, 76 mmol) was added. The mixture was then cooled to 0°C and Methylsulfonyl-terminated telechelic polydimethylsiloxane from Example 4 (105.4 g, 34.5 mmol) was added all at once. After an initial exothermic reaction the mixture formed a stiff gel due to the formation of potassium mesylate. After 1 hour at 0°C, the mixture was kept at room temperature for 8 hours. Water (750 ml) was then added, which dissolves the gel forming a two-layer system. Subsequently the mixture was extracted with diethyl ether (3x200 ml). The combined organic layers were washed with brine (2x 300 ml), dried on anhydrous magnesium sulfate and concentrated in vacuo, to yield a clear slightly yellow viscous liquid (104.2 g, 99%) 1H NMR (300 MHz, $CDCl_3$, ppm) 2.79 (t, $CH_2SAc$), 2.24 (s, $SCOCH_3$), 1.49 (m, $CH_2CH_2SAc$), 1.16-1.36 (m, γ-, δ- and ε- $CH_2$), 0.45 (broad t, $CH_2Si$), 0.00 (s, $(CH_3)_2Si(OR)_2$), -0.03 (s, $(CH_3)_2Si(CH_2)(OR)$).

**Example 6 - Formation of Thiol- terminated telechelic polydimethylsiloxane**

A stirred solution from Example 5 (104.2 g, 34.2 mmol) in Tetrahydrofuran (100 ml) was brought under argon and was cooled down to 0°C. Subsequently, n-propylamine (6.2 ml, 75 mmol) was added and the stirring was continued for 1 hour. Under a steady stream of argon, dilute hydrochloric acid (50 ml, 10%) and brine (300 ml) were then added. Subsequently, the mixture was extracted with diethyl ether (3x200 ml). The combined organic layers were washed with brine (2x 300 ml), dried on anhydrous magnesium sulfate and concentrated in vacuo, to yield a clear slightly yellow viscous liquid (100 g, 98%) 1H NMR (300 MHz, CDCl3, ppm) 2.44 (q, $CH_2SH$), 1.53 (m, $CH_2CH_2SH$), 1.15-1.39 (m, γ-, δ- and ε- $CH_2$), 0.46 (broad t, $CH_2Si$), 0.00 (s, $(CH_3)_2Si(OR)_2$), -0.03 (s, $(CH_3)_2Si(CH_2)(OR)$).

**Example 7**

A telechelic hydroxyl-functional PDMS was synthesized by first converting the hydroxyl functions into mesylate followed by a nucleophilic substitution with potassium thioacetate in DMF. The dithiol was obtained by treating the thioacetate with a small excess of dry propylamine to give, after workup, the free thiol as a slightly yellow and almost odorless oil.

In order to assess the formation polymerization and/or crosslinking of thiol and ene functional PDMS with regard to stoichiometry, conversion, and side-reactions such as disulfide formation, the starting materials were characterized using NMR analysis and triple-detection GPC for obtaining reliable data on molecular weight (shown below in Table 2). $^1$H NMR analysis of the free thiol showed a number average molecular weight Mn of 3100, which is slightly higher than the parent hydroxy-functional material (Mn 2900). This difference can be explained by a slight and almost unavoidable formation of disulfide in the telechelic dithiol when exposed to atmospheric oxygen (indicated by a triplet at 2.60 ppm). The molecular weight data obtained by triple detection GPC data and end-group analysis using NMR of polymers **5, 6,**

and **7** shows considerable differences. Especially polymer **6** shows a considerable difference between the GPC and the NMR analysis. It is well-known that commercially available telechelic PDMS polymers, prepared by ring opening polymerization, will contain a certain amount of cyclic oligomers of low molecular weight that might be below.

In order to assess the speed and efficiency of thiol-ene coupling of thiol and ene functional PDMS, the prepared dithiol **(4)** was combined with **6** (Table 2) in different ratios with the addition of 3 mg/g of photo initiator (DMPA). During irradiation of 16 g degassed aliquots with 365 nm UV light (~12 mW/cm$^2$), the viscosity was measured as a function of irradiation time, using a Brookfield viscometer.

**Table 2.**

| | *Mn (g/mol) indicated by supplier* | *Mn (g/ mol) NMR* | *Mn (g/ mol) GPC* | *D* | *thiol content (mol %) indicated by supplier* | *thiol content (mol %) (from NMR)* |
|---|---|---|---|---|---|---|
| Telechelic thiol functional PDMS (**4**) | - | 3100 | - | - | - | 5.4 |
| 1000 cSt vinyl PDMS (**5**) | 28000 | 17900 | 19700 | 1.76 | - | - |
| 5000 cSt vinyl PDMS **(6)** | 49500 | 33000 | 45000 | 1.57 | - | - |
| 10000 cSt vinyl PDMS (**7**) | 62700 | 41300 | 45300 | 1.76 | - | - |
| Thiol-functional PDMS **(8)** | 6000-8000 | - | 6800 | 2.76 | 4-6 | 3.86 |

The viscosity of the final product obtained after photo polymerization highly depends on the ratio of thiol to ene functional PDMS, as expected for an efficient linking reaction (see FIG. 20a). At a 1:1 molar ratio the viscosity of the final product was so high that it could not be measured with the applied Brookfield viscometer (upper-limit of 2.2*10$^6$ cPs). However, at this 1:1 ratio the maximum measurable viscosity translates, via a formula linking melt-viscosity of PDMS with its number average molecular weight, into an approximate minimum reached molecular weight $M_n$ of 190000, which means that on average at least 5 vinyl-functional PDMS units of $M_n$ 33000 **(6)** were linked to a single chain by the dithiol chain-extender **(4).**

A decrease in induction time with an increase in dithiol content is observed up to equimolar ratio (see FIG. 20b). Dissolved oxygen, which acts as an inhibitor by converting carbon-centered radicals into peroxy-radicals, is most likely consumed at a faster rate with increased thiol concentration due to transfer from the peroxy-radical to the thiol, which re-activates the "dead" peroxy-radical, thus increasing the overall concentration of radicals and thereby the consumption of oxygen. However, beyond the point of thiol to ene equimolarity, the decrease in induction time levels off, suggesting that the inhibition time, in this case, is not only dependent on the thiol concentration but on the thiol to ene ratio as well. This, at first sight peculiar observation, indicates the formation of a thiol-ene complex prior to the actual thiol-ene radical addition process. In such case, oxygen can be scavenged preferentially by an activated charge-transfer thiol-ene complex leading to a steeper thiol-concentration dependence of the inhibition time up to the point of equimolarity, after which addition of extra thiol moieties will not lead to the formation of extra charge transfer complexes and thus to a less pronounced further decrease in inhibition time.

Due to the dilution of functional groups, quantification of the conversion using calorimetry or Raman spectroscopy may be more difficult. Therefore, viscosimetry was considered because of this method's sensitivity to large changes in molecular weight associated with high molecular weight components. Viscosity during the chain extension reaction was measured in steady shear as function of irradiation time. Conversion was calculated as a function of time using the relationship between number average molecular weight and conversion:

$$x = \frac{M_n * N_{v0} + M_n * N_{t0} - m}{2M_n * N_{t0}}$$

Where $N_{v0}$ and $N_{t0}$ represent the number of moles of vinyl-functional telechelic polymer and thiol-functional telechelic polymer, and *m* Represents the total mass of the silicone polymer. The number molecular weight $M_n$ was calculated using the formula:

$$\log \eta = 1 + 0.0123 * M_n^{0.5}$$

The rate of polymerization $R_p$ can then be expressed as:

$$R_p = -[M]_0 * \frac{dx}{dt} = k'(x) * [M]^{\alpha} * [S - H]^{\gamma} * I_0^{\beta}$$

where *x* is the conversion of the double bonds, *k'(x)* is a conversion-dependent quantity, $[M]_0$ is the beginning double-bond concentration in the silicones, [S - H] is the thiol concentration of the system, $I_0$ is the intensity of the incident light, and $\alpha$, $\beta$, and $\gamma$ are exponents. The maximum rate of polymerization $R_p^m$ (normalized by $M_0$) was determined from the maximum slope of a plot of x versus time (shown in FIG 21). From FIG. 21, it is clear that the maximum rate of polymerization increases steeply up to the point of thiol to ene equimolarity, followed by a decrease in reaction rate after the point of equimolarity. The increase in the maximum reaction rate up to the point of equimolarity can be explained by an increase in the speed of propagation which is caused by an increasing of the efficiency of the transfer to thiol with increasing thiol concentration. However, after the point of equimolarity the termination by thiyl-thiyl radical recombination becomes more dominant leading to a drop in $R_p^m$. This drop in $R_p^m$ is steep, indicating a sudden change in reaction kinetics, once the point of equivalence is passed.

From the rheological data from the curing of linear thiol and ene functional PDMS, it is clear that photo-initiated thiol-ene chemistry can be applied to efficiently link different PDMS molecules and that the kinetics of this linking process are similar to the kinetics of the crosslinking of vinyl-functional PDMS with multi thiol-functional PDMS. Combination of thiol functional chain-extenders with multifunctional crosslinkers should therefore lead to the formation of a crosslinked network with long interlinked PDMS-segments between crosslinks, provided that the stoichiometric ratio of thiol to ene is correct. The composition of cured crosslinked materials was studied using mechanical characterization, extraction experiments, high-resolution solid-state NMR, and liquid-state NMR analysis of fluoride-solubilized thiol-ene cured PDMS-polymer networks.

To assess the influence of the thiol to ene ratio and the molecular weight of the vinyl functional PDMS on the network properties, a series of cured samples, using different thiol to ene ratios and different molecular weight telechelic vinyl functional PDMS, was prepared. First, the samples were subjected to a tensile test in order to determine the elastic modulus of the crosslinked networks, followed by a Soxhlet extraction with pentane to determine the sol-fraction of the networks and also to determine the chemical composition of this sol-fraction using liquid state NMR.

FIGS. 22a and 22b show the moduli for three different series of networks prepared from telechelic vinyl PDMS of different molecular weight (5-7), the moduli all depend strongly on the thiol to ene ratios. For all samples, a maximum in the E-modulus is found close to the ratio of 1:1, which confirms that an optimum in the network formation is reached at this ratio and that, contrary to hydrosilylation curing (for example) of many silicone materials, no excess of thiol-functional crosslinker is required for obtaining optimal cure. The amount of extractable material (pentane soluble fraction) per unit of cured material (FIG. 22b) follows a similar trend as compared to the elastic modulus data in FIG. 22a; all samples show a minimum in extractable material at a thiol to ene ratio of approximately 1:1. For all molecular weights a similar minimum sol-fraction of around 10 weight percent was found (FIG. 22b).

An NMR-analysis of the pentane-soluble fractions of the networks prepared from the high molecular weight telechelic vinyl PDMS (7) was performed. Two different sets of protons are of significance in the characterization of the extracted material: the unsaturated vinyl protons (5.6-6.15ppm) and the alpha thiol/thio-ether methylene moieties (2.5 ppm). In FIG. 23 the number of protons (all normalized to the Methylsiloxane signal at 0 ppm) of each set are plotted as a function of the thiol to ene ratio. The vinyl protons decrease in intensity with an increasing thiol to ene ratio. At a ratio of just above the point of equimolarity, the number has become equal to zero. The thiol/thio-ether signal first decreases to zero at a ratio just below the point of equivalence and increases steeply at higher ratios. The disappearance of the vinyl signal just above the point of equivalence is indicative of the efficient nature of the thiol-ene curing even at low thiol and ene concentrations of -0.05 mol/l this high molecular-weight thiol-ene curing elastomer is able to fully cure at equimolarity of both thiol and ene components. The presence of alpha thiol/thio-ether methylene at low thiol to ene ratios can be explained by the initial formation of soluble branched structures containing thio-ether moieties and an excess of double-bonds that are indeed observed as well. When the amount of thiol crosslinker is increased even further, the extractables, close to the point of equivalence, do not contain alpha thiol/thio-ether methylene units, indicating that the extractable fraction is at that point mainly non-functional PDMS (e.g., cyclic oligomers) that are already present in the used grade of telechelic vinyl PDMS.

The NMR analysis of extractables from cured thiol-ene PDMS networks gives information on the components that do not form part of the network. NMR analysis of the network itself is much more demanding and requires the use of solid-state NMR techniques (HRMAS) or the application of a chemical degradation step prior to liquid-state NMR

analysis. The first option was tried using a 700 MHz NMR spectrometer fitted with a solid-state probe rotating at the magic angle. A typical spectrum obtained for a fully cured sample of thiol-ene elastomer is shown in FIG. 24. Both alpha methylene-silyl signals (labeled as $\gamma$ and $\beta$') are present and are fully resolved from other signals that are related to the alpha thiomethylene signals (thiol and thioether), the beta thiomethylene (overlap with the water signal) and thiol SH-signal (overlap with a signal from a minor unknown impurity). From the HRMAS data the double bond conversion was calculated using both the double bond signal directly or from the alpha to gamma signal ratio, where the gamma signal is used as an internal standard since this signal is independent on the thiol-ene conversion and is not overlapping with any other signal.

A second method for the analysis of crosslinked thiol-ene PDMS networks was developed in order to avoid the expensive 700MHz HRMAS analysis. The presence of ample siloxane bonds in the crosslinked thiol- PDMS allows the mild and selective cleavage of network segments using tetrabutylammonium fluoride, resulting in smooth dissolution of the crosslinked material with the formation of tetrabutyammonium siloxanolate and silylfluoride containing polymer fragments. Ammonium chloride was added after dissolution of the network in order to neutralize the siloxanolate to silanol moieties, shown below:

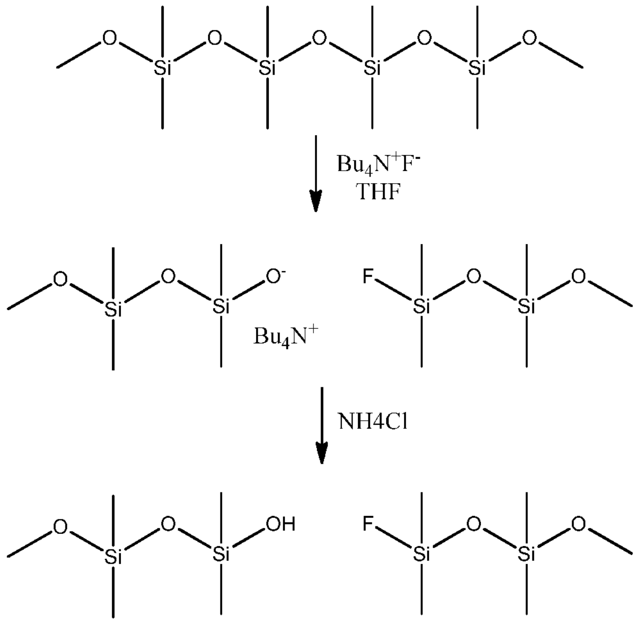


From the NMR spectra of the solubilized networks, the double bond conversion was calculated in a similar way as done for the HRMAS measurements (*i.e.,* directly from the double bond signal or from the alpha to gamma signal ratio). In addition to the calculated double bond conversions obtained from HRMAS and fluoride dissolution, the maximum obtainable conversion was calculated from the feed ratio of thiol and ene (FIG 25). All double bond conversion results, HRMAS, and fluoride dissolution coincide within the margin of error with the maximum obtainable conversion-line. This proves that the thiol-ene conversion in the formed networks is close to the predicted theoretical maxima and that fluoride dissolution of thiol-ene PDMS networks is a viable method for the chemical analysis of these crosslinked materials. The errors in the double-bond conversions calculated from the alpha/gamma ratios gave the largest experimental errors (-15% for both fluoride dissolution and HRMAS) due to the indirect means of obtaining a value of the double-bond conversion, using this method.

The NMR data of the solubilized thiol-ene PDMS networks revealed that the integral of the dimethylsiloxane moiety is not a function of the amount of PDMS added to form the network. The reason for this observation proved to be the loss of dimethylsiloxane as difluoro dimethylsilane, which is a gas at room temperature. No loss of either vinyl dimethyl silyl moieties or other functional groups was observed upon exposure to fluoride ions.

Although examples have been described herein, it should be appreciated that any subsequent arrangement designed to achieve the same or similar purpose may be substituted for the specific examples shown. This disclosure is intended to cover any and all subsequent adaptations or variations of various examples. Combinations of the above examples, and other examples not specifically described herein, may be apparent to those of skill in the art upon reviewing the description.

The Abstract is provided with the understanding that it will not be used to interpret or limit the scope or meaning of the claims. In addition, in the foregoing Detailed Description, various features may be grouped together or described in a single example for the purpose of streamlining the disclosure. This disclosure is not to be interpreted as reflecting

an intention that the claimed examples require more features than are expressly recited in each claim. Rather, as the following claims reflect, inventive subject matter may be directed to less than all of the features of any of the disclosed examples. Thus, the following claims are incorporated into the Detailed Description, with each claim standing on its own as defining separately claimed subject matter.

The above disclosed subject matter is to be considered illustrative, and not restrictive, and the appended claims are intended to cover all such modifications, enhancements, and other examples, which fall within the true scope of the description. Thus, to the maximum extent allowed by law, the scope is to be determined by the broadest permissible interpretation of the following claims and their equivalents, and shall not be restricted or limited by the foregoing detailed description.

## Claims

**1.** A closure or interconnect system, comprising:

a housing,
a cable, and
a dry silicone gel made by a method comprising reacting:

a crosslinker having thiol groups, and
a base polymer having a vinyl-silicone group,

wherein the crosslinker and base polymer are combined in the presence of an initiator by a thiol-ene chemistry reaction mechanism.

**2.** The closure or interconnect system of claim 1, wherein the method for making the dry silicone gel further comprises adding a chain extender having thiol groups to the crosslinker and the base polymer in the reacting step.

**3.** The closure or interconnect system of claim 1, wherein the dry silicone gel is compatible with a low smoke zero halogen (LSZH) cable as determined by a pressure loss test or tightness test under IEC 61300-2-38, Method B, wherein the gel and cable are compatible if the difference in pressure before and after the test is less than 2 kPa (0.02 atm) following at least one of the following mechanical or environmental tests: axial tension test according to IEC 61300-2-4, flexure test according to IEC 61300-2-37, re-entry test according to IEC 61300-2-33, torsion test according to IEC 61300-2-5, resistance to aggressive media test under IEC 61300-2-34, ISO 1998/1, and EN 590, resistance to stress cracking test under IEC 61300-2-34, salt fog test under IEC 61300-2-36 and IEC 60068-2-11, test Ka, temperature cycling test under IEC 61300-2-22 and IEC 60068-2-14, test Nb, and waterhead test under IEC 61300-2-23, method 2.

**4.** The closure or interconnect system of any one of claims 1 to 3, further comprising a connector and a receptacle for the connector.

**5.** The closure or interconnect system of any one of claims 1 to 3, wherein the dry silicone gel comprises one or more of the following properties:

a) a Shore 000 hardness between 80 g and 300 g, or from 160 g to 220 g measured according to IS0868 or ASTM D2240;
b) an original size and a stress relaxation of between 20% and 65%, optionally between 40% to 60% when subjected to a deformation of 50% of the original size;
c) a compression set between 4% and 20%, optionally between 10% to 14%, when measured according to ASTM D395 after 50% strain has applied to the gel for 1000 hours at 70°C; and
d) less than 10% oil bleed out after being under compression of 1.2 atm for 60 days at 60°C, wherein the oil bleed out is measured on a wire mesh, wherein the oil loss may exit the gel through the mesh, and the weight of the gel sample is recorded before and after the pressure has been applied.

**6.** The closure or interconnect system of claim 1, wherein the method for making the dry silicone gel comprises:

providing the base polymer having a vinyl-silicone group, the crosslinker having thiol groups, the initiator, and optionally a chain extender having thiol groups;

providing heat or ultraviolet light; and
reacting the base polymer, crosslinker, and optionally the chain extender, in the presence of the initiator to form the dry silicone gel.

**7.** The closure or interconnect system of claim 6, wherein the method for making the dry silicone gel comprises providing a chain extender that is a thiol end-capped polydimethylsiloxane (PDMS) or a thio-functional telechelic PDMS.

**8.** The closure or interconnect system of claim 6, wherein the base polymer comprises a vinyl-terminated polydimethylsiloxane, optionally wherein the base polymer has one or more of the following properties:

a) a number average molecular weight Mn between 5,000 g/mol and 70,000 g/mol when measured by triple-detection GPC according to the description;
b) a viscosity between 100 $mm^2/s$ and 165,000 $mm^2/s$ when measured using a Brookfield viscometer according to the description; and
c) a vinyl content between 0.01 mmol/g and 0.1 mmol/g.

**9.** The closure or interconnect system of claim 6, wherein the crosslinker comprises a polydimethylsiloxane copolymer having a thiol content between 0.1 mmol/g and 10 mmol/g by $^1$H-NMR and a molecular weight between 2,000 g/mol and 20,000 g/mol by triple-detection GPC, optionally wherein the crosslinker is a (mercaptopropyl) methylsiloxane-dimethylsiloxane copolymer having a thiol content between 0.1 mmol/g and 10 mmol/g by $^1$H-NMR and a molecular weight between 2,000 g/mol and 20,000 g/mol by triple-detection GPC.

**10.** The closure or interconnect system of claim 6, wherein the initiator is a photoinitiator, optionally wherein the photoinitiator is selected from the group consisting of: acetophenone, anisoin, anthraquinone, benzil, benzoin, benzoin ethyl ether, benzoin isobutyl ether, benzoin methyl ether, benzophenone, benzophenone/1- hydroxycyclohexyl phenyl ketone, 3,3',4,4'-benzophenonetetracarboxylic dianhydride, benzoylbiphenyl, 2-benzyl-2-(dimethylamino)-4'-morpholinobutyrophenone, 4,4'- bis(diethylamino) benzophenone, 4,4'-bis(dimethylamino) benzophenone, camphorquinone, 2-chlorothioxanthen-9-one, dibenzosuberenone, 2,2-diethoxyacetophenone, 4,4'- dihydroxybenzophenone, 2,2-dimethoxy-2-phenylaceto-phenone. 4-(dimethylamino) benzophenone, 4,4'-dimethylbenzil, 2,5-dimethylbenzophenone, 3,4-dimethylbenzophenone, diphenyl(2,4,6-trimethylbenzoyl) phosphine oxide/2-hydroxy-2-methylpropiophenone, 4'- ethoxyacetophenone, 2-ethylanthraquinone, 3 3'-hydroxyacetophenone, 4 4'- hydroxyacetophenone, 3-hydroxybenzophenone, 4-hydroxybenzophenone, 1- hydroxycyclohexyl phenyl ketone, 2-hydroxy-2-methylpropiophenone, 2- methylbenzophenone, 3-methylbenzophenone, methybenzoylformate, 2-methyl-4'-(methylthio)-2-morpholinopropiophenone, phenanthrenequinone, 4'-phenoxyacetophenone, and thioxanthen-9-one, and mixtures thereof.

**11.** The closure or interconnect system of claim 6, wherein the initiator is a thermal initiator, optionally wherein the thermal initiator is a peroxide or azo-compound, optionally wherein the thermal initiator is selected from the group consisting of 2,2'-azobisisobutyronitrile (AIBN), cyclohexyl analogs of AIBN, 2,2'-azobis(4- methoxy-2,4-dimethyl valeronitrile), and mixtures thereof.

**12.** The closure or interconnect system of claim 6, wherein the method for making the dry silicone gel further comprises providing at least one additive selected from the group consisting of: flame retardants, coloring agents, adhesion promoters, stabilizers, fillers, dispersants, flow improvers, plasticizers, slip agents, toughening agents, and combinations thereof, optionally between 0.1 wt % and 30 wt% of a toughening agent, optionally wherein the toughening agent is a fumed silica.

**13.** The closure or interconnect system of claim 1, wherein the method of making the dry silicone gel comprises:

providing a composition comprising

the base polymer as a vinyl-terminated polydimethylsiloxane having a number average molecular weight Mn between 28,000 g/mol and 70,000 g/mol when measured by triple-detection GPC according to the description, a viscosity between 3,000 $mm^2/s$ and 7,000 $mm^2/s$ when measured using a Brookfield viscometer according to the description, and a vinyl content between 0.01 mmol/g and 0.1 mmol/g;
the crosslinker as a polydimethylsiloxane copolymer crosslinker having a thiol content between 0.1 mmol/g and 10 mmol/g and a molecular weight between 2,000 g/mol and 20,000 g/mol when measured by triple-detection GPC according to the description;

a chain extender;
a photo or thermal initiator; and
a fumed silica hardening agent; optionally wherein the composition comprises a thiol to ene ratio of 1:1;

providing heat or ultraviolet light; and
reacting the base polymer, crosslinker, and chain extender in the presence of the initiator to form the dry silicone.

**14.** The closure or interconnect system of any one of claims 1 to 13, wherein the dry silicone gel is prepared from a composition comprising:

45-99.99 wt% of the base polymer having a vinyl-silicone group;
0.01-5 wt% of the crosslinker having thiol groups; and
0-50 wt% of a chain extender having thiol groups.

**15.** The closure or interconnect system of any one of claims 1 to 13, wherein the composition comprises 90-99.99 wt% of the base polymer, 0.01-5 wt% of the crosslinker, and 0.01-5 wt% of the chain extender.

## Patentansprüche

**1.** Verschluss- oder Verbindungssystem, umfassend:

ein Gehäuse,
ein Kabel und
ein trockenes Silicongel, das durch ein Verfahren hergestellt ist, das Umsetzen von:

einem Vernetzer mit Thiolgruppen und
einem Grundpolymer mit einer Vinylsilicongruppe umfasst,

wobei der Vernetzer und das Grundpolymer in Gegenwart eines Initiators durch einen Reaktionsmechanismus der Thiol-En-Chemie kombiniert werden.

**2.** Verschluss- oder Verbindungssystem gemäß Anspruch 1, wobei das Verfahren zur Herstellung des trockenen Silicongels ferner Zugeben eines Kettenverlängerungsmittels mit Thiolgruppen zu dem Vernetzer und dem Grundpolymer bei dem Reaktionsschritt umfasst.

**3.** Verschluss- oder Verbindungssystem gemäß Anspruch 1, wobei das trockene Silicongel mit einem raucharmen halogenfreien (LSZH)-Kabel vereinbar ist, wie bestimmt durch eine Druckverlustprüfung oder Dichtheitsprüfung gemäß IEC 61300-2-38, Verfahren B, wobei das Gel und das Kabel vereinbar sind, wenn der Druckunterschied vor und nach der Prüfung kleiner als 2 kPa (0,02 atm) nach wenigstens einer der folgenden mechanischen oder Umgebungsprüfungen ist: Axialspannungsprüfung gemäß IEC 61300-2-4, Biegeprüfung gemäß IEC 61300-2-37, Wiedereintrittsprüfung gemäß IEC 61300-2-33, Torsionsprüfung gemäß IEC 61300-2-5, Prüfung auf Beständigkeit gegen aggressive Medien gemäß IEC 61300-2-34, ISO 1998/1 und EN 590, Prüfung auf Spannungsrissbeständigkeit gemäß IEC 61300-2-34, Salznebelprüfung gemäß IEC 61300-2-36 und IEC 60068-2-11, Prüfung Ka, Temperaturzyklusprüfung gemäß IEC 61300-2-22 und IEC 60068-2-14, Prüfung Nb, und Wasserdruckprüfung gemäß IEC 61300-2-23, Verfahren 2.

**4.** Verschluss- oder Verbindungssystem gemäß einem der Ansprüche 1 bis 3, ferner umfassend ein Verbindungsstück und eine Aufnahme für das Verbindungsstück.

**5.** Verschluss- oder Verbindungssystem gemäß einem der Ansprüche 1 bis 3, wobei das trockene Silicongel eine oder mehrere der folgenden Eigenschaften aufweist:

a) eine Shore 000-Härte zwischen 80 g und 300 g oder von 160 g bis 220 g, gemessen gemäß ISO 868 oder ASTM D2240;
b) eine Ursprungsgröße und eine Spannungserholung von zwischen 20 % und 65 %, gegebenenfalls zwischen 40 % und 60 %, wenn einer Verformung von 50 % der Ursprungsgröße unterworfen;
c) einen Druckverformungsrest zwischen 4 % und 20 %, gegebenenfalls zwischen 10 % und 14 %, wenn

gemessen gemäß ASTM D395, nachdem 50 % Dehnung an das Gel für 1000 Stunden bei 70 °C angelegt war; und

d) weniger als 10 % Öl-Ausbluten nach Kompression von 1,2 atm für 60 Tage bei 60 °C, wobei das Öl-Ausbluten auf einem Drahtnetz gemessen wird, wobei der Ölverlust das Gel durch das Netz verlassen kann und das Gewicht der Gelprobe vor und nach dem Anlegen des Drucks gemessen wird.

**6.** Verschluss- oder Verbindungssystem gemäß Anspruch 1, wobei das Verfahren zur Herstellung des trockenen Silicongels umfasst:

Bereitstellen des Grundpolymers mit einer Vinylsilicongruppe, des Vernetzers mit Thiolgruppen, des Initiators und gegebenenfalls eines Kettenverlängerungsmittels mit Thiolgruppen;
Bereitstellen von Wärme oder Ultraviolettlicht; und
Umsetzen des Grundpolymers, des Vernetzers und gegebenenfalls des Kettenverlängerungsmittels in Gegenwart des Initiators, um das trockene Silicongel zu bilden.

**7.** Verschluss- oder Verbindungssystem gemäß Anspruch 6, wobei das Verfahren zur Herstellung des trockenen Silicongels Bereitstellen eines Kettenverlängerungsmittels umfasst, der ein Thiolendverkapptes Polydimethylsiloxan (PDMS) oder ein thiofunktionelles telechelisches PDMS ist.

**8.** Verschluss- oder Verbindungssystem gemäß Anspruch 6, wobei das Grundpolymer ein vinylterminiertes Polydimethylsiloxan umfasst, wobei das Grundpolymer gegebenenfalls eine oder mehrere der folgenden Eigenschaften aufweist:

a) ein anzahlgemitteltes Molekulargewicht Mn zwischen 5.000 g/mol und 70.000 g/mol, wenn gemessen durch Dreifachdetektion-GPC gemäß der Beschreibung;
b) eine Viskosität zwischen 100 $mm^2/s$ und 165.000 $mm^2/s$, wenn gemessen unter Verwendung eines Brookfield-Viskosimeters gemäß der Beschreibung; und
c) einen Vinylgehalt zwischen 0,01 mmol/g und 0,1 mmol/g.

**9.** Verschluss- oder Verbindungssystem gemäß Anspruch 6, wobei der Vernetzer einen Gehalt von Polydimethylsiloxan-Copolymer mit einen Thiolgehalt zwischen 0,1 mmol/g und 10 mmol/g nach $^1$H-NRM und einem Molekulargewicht zwischen 2.000 g/mol und 20.000 g/mol nach Dreifachdetektion-GPC umfasst, wobei der Vernetzer gegebenenfalls ein (Mercaptopropyl)methylsiloxan-Dimethylsiloxan-Copolymer mit einem Thiolgehalt zwischen 0,1 mmol/g und 10 mmol/g nach $^1$H-NMR und einem Molekulargewicht zwischen 2.000 g/mol und 20.000 g/mol nach Dreifachdetektion-GPC ist.

**10.** Verschluss- oder Verbindungssystem gemäß Anspruch 6, wobei der Initiator ein Photoinitiator ist, wobei der Photoinitiator gegebenenfalls ausgewählt ist aus der Gruppe bestehend aus Acetophenon, Anisoin, Anthrachinon, Benzil, Benzoin, Benzoinethylether, Benzoinisobutylether, Benzoinmethylether, Benzophenon, Benzophenon/1-Hydroxycyclohexylphenylketon, 3,3',4,4'-Benzophenontetracarbonsäuredianhydrid, Benzoylbiphenyl, 2-Benzyl-2-(dimethylamino)-4'-morpholinobutyrophenon, 4,4'-Bis(diethylamino)benzophenon, 4,4'-Bis(dimethylamino)benzophenon, Campherchinon, 2-Chlorthioxanthen-9-on, Dibenzosuberenon, 2,2-Diethoxyacetophenon, 4,4'-Dihydroxybenzophenon, 2,2-Dimethoxy-2-phenylacetophenon, 4-(Dimethylamino)benzophenon, 4,4'-Dimethylbenzil, 2,5-Dimethylbenzophenon, 3,4-Dimethylbenzophenon, Diphenyl(2,4,6-trimethylbenzoyl)phosphinoxid/2-Hydroxy-2-methylpropiophenon, 4'-Ethoxyacetophenon, 2-Ethylanthrachinon, 3,3'-Hydroxyacetophenon, 4,4'-Hydroxyacetophenon, 3-Hydroxybenzophenon, 4-Hydroxybenzophenon, 1-Hydroxycyclohexylphenylketon, 2-Hydroxy-2-methylpropiophenon, 2-Methylbenzophenon, 3-Methylbenzophenon, Methybenzoylformiat, 2-Methyl-4'-(methylthio)-2-morpholinopropiophenon, Phenanthrenchinon, 4'-Phenoxyacetophenon und Thioxanthen-9-on und Gemischen davon.

**11.** Verschluss- oder Verbindungssystem gemäß Anspruch 6, wobei der Initiator ein thermischer Initiator ist, wobei der thermische Initiator gegebenenfalls eine Peroxid- oder Azoverbindung ist, wobei der thermische Initiator gegebenenfalls ausgewählt ist aus der Gruppe bestehend aus 2,2'-Azobisisobutyronitril (AIBN), Cyclohexylanaloga von AIBN, 2,2'-Azobis(4-methoxy-2,4-dimethylvaleronitril) und Gemischen davon.

**12.** Verschluss- oder Verbindungssystem gemäß Anspruch 6, wobei das Verfahren zur Herstellung des trockenen Silicongels ferner Bereitstellen wenigstens eines Zusatzstoffs ausgewählt aus der Gruppe bestehend aus: Flammhemmern, Farbstoffen, Haftförderern, Stabilisatoren, Füllstoffen, Dispergiermitteln, Fließverbesserern, Weichmachern, Gleitmitteln, Schlagfestmachern und Kombinationen davon umfasst, gegebenenfalls zwischen 0,1 Gew.-%

und 30 Gew.-% an einem Schlagfestmacher, wobei der Schlagfestmacher gegebenenfalls eine pyrogene Kieselsäure ist.

**13.** Verschluss- oder Verbindungssystem gemäß Anspruch 1, wobei das Verfahren zur Herstellung des trockenen Silicongels umfasst:

Bereitstellen einer Zusammensetzung umfassend

das Grundpolymer als vinylterminiertes Polydimethylsiloxan mit einem anzahlgemittelten Molekulargewicht Mn zwischen 28.000 g/mol und 70.000 g/mol, wenn gemessen durch Dreifachdetektion-GPC gemäß der Beschreibung, einer Viskosität zwischen 3.000 $mm^2/s$ und 7.000 $mm^2/s$, wenn gemessen unter Verwendung eines Brookfield-Viskosimeters gemäß der Beschreibung, und einem Vinylgehalt zwischen 0,01 mmol/g und 0,1 mmol/g;
den Vernetzer als einen Polydimethylsiloxan-Copolymer-Vernetzer mit einem Thiolgehalt zwischen 0,1 mmol/g und 10 mmol/g und einem Molekulargewicht zwischen 2.000 g/mol und 20.000 g/mol, wenn gemessen durch Dreifachdetektion-GPC gemäß der Beschreibung;
ein Kettenverlängerungsmittel;
einen Photo- oder thermischen Initiator; und
einen pyrogene-Kieselsäure-Härter;
wobei die Zusammensetzung gegebenenfalls ein Thiolzu-En-Verhältnis von 1:1 aufweist;

Bereitstellen von Wärme oder Ultraviolettlicht; und
Umsetzen des Grundpolymers, des Vernetzers und des Kettenverlängerungsmittels in Gegenwart des Initiators, um das trockene Silicon zu bilden.

**14.** Verschluss- oder Verbindungssystem gemäß einem der Ansprüche 1 bis 13, wobei das trockene Silicongel aus einer Zusammensetzung hergestellt ist, die umfasst:

45-99,99 Gew.-% an dem Grundpolymer mit einer Vinylsilicongruppe;
0,01-5 Gew.-% an dem Vernetzer mit Thiolgruppen; und
0-50 Gew.-% an einem Kettenverlängerungsmittel mit Thiolgruppen.

**15.** Verschluss- oder Verbindungssystem gemäß einem der Ansprüche 1 bis 13, wobei die Zusammensetzung 90-99,99 Gew.-% an dem Grundpolymer, 0,01-5 Gew.-% an dem Vernetzer und 0,01-5 Gew.-% an dem Kettenverlängerungsmittel umfasst.

**Revendications**

**1.** Système de fermeture ou d’interconnexion, comprenant :

un boîtier,
un câble, et
un gel de silicone sec fabriqué par un procédé comprenant la réaction :

d’un agent de réticulation comportant des groupes thiol, et
d’un polymère de base comportant un groupe vinyl-silicone,

dans lequel l’agent de réticulation et le polymère de base sont combinés en présence d’un initiateur par un mécanisme chimique de réaction thiol-ène.

**2.** Système de fermeture ou d’interconnexion selon la revendication 1, dans lequel le procédé de fabrication du gel de silicone sec comprend en outre l’addition d’un agent d’extension de chaîne comportant des groupes thiol à l’agent de réticulation et au polymère de base dans l’étape de réaction.

**3.** Système de fermeture ou d’interconnexion selon la revendication 1, dans lequel le gel de silicone sec est compatible avec un câble à faible émission de fumée et sans halogène (LSZH), cette caractéristique étant déterminée par un essai de perte de pression ou un essai d’étanchéité selon IEC 61300-2-38, Méthode B, le gel et le câble étant

compatibles si la différence de pression avant et après l'essai est inférieure à 2 kPa (0,02 atm) après au moins l'un des essais mécaniques ou environnementaux suivants : essai de traction axiale selon IEC 61300-2-4, essai de flexion selon IEC 61300-2-37, essai de réentrée selon IEC 61300-2-33, essai de torsion selon IEC 61300-2-5, essai de résistance aux milieux agressifs selon IEC 61300-2-34, ISO 1998/1 et EN 590, essai de résistance à la fissuration sous contrainte selon IEC 61300-2-34, essai au brouillard salin selon IEC 61300-2-36 et IEC 60068-2-11, essai Ka, essai de variation cyclique de température selon IEC 61300-2-22 et IEC 60068-2-14, essai Nb, et essai sous colonne d'eau selon IEC 61300-2-23, Méthode 2.

**4.** Système de fermeture ou d'interconnexion selon l'une quelconque des revendications 1 à 3, comprenant en outre un connecteur et un réceptacle pour le connecteur.

**5.** Système de fermeture ou d'interconnexion selon l'une quelconque des revendications 1 à 3, dans lequel le gel de silicone sec comporte une ou plusieurs des propriétés suivantes :

a) une dureté Shore 000 de 80 g à 300 g, ou de 160 g à 220 g, mesurée selon ISO 868 ou ASTM D2240 ;
b) une taille initiale et une relaxation des contraintes de 20 % à 65 %, optionnellement de 40 % à 60 %, lorsqu'il est soumis à une déformation de 50 % de la taille initiale ;
c) une déformation permanente après compression de 4 % à 20 %, optionnellement de 10 % à 14 %, lorsqu'elle est mesurée selon ASTM D395 après qu'une déformation de 50 % a été appliquée au gel pendant 1 000 heures à 70 °C ; et
d) une perte par migration de moins de 10 % de l'huile après avoir subi une compression de 1,2 atm pendant 60 jours à 60 °C, la perte par migration de l'huile étant mesurée sur une maille métallique, l'huile perdue pouvant sortir du gel par la maille, et le poids de l'échantillon de gel étant enregistré avant et après que la pression a été appliquée.

**6.** Système de fermeture ou d'interconnexion selon la revendication 1, le procédé de fabrication du gel de silicone sec comprenant :

la fourniture du polymère de base comportant un groupe vinyl-silicone, de l'agent de réticulation comportant des groupes thiol, de l'initiateur, et optionnellement d'un agent d'extension de chaîne comportant des groupes thiol ;
l'apport de chaleur ou de lumière ultraviolette ; et
la réaction du polymère de base, de l'agent de réticulation, et optionnellement de l'agent d'extension de chaîne, en présence de l'initiateur pour former le gel de silicone sec.

**7.** Système de fermeture ou d'interconnexion selon la revendication 6, le procédé de fabrication du gel de silicone sec comprenant la fourniture d'un agent d'extension de chaîne qui est un polydiméthylsiloxane (PDMS) dont les groupes terminaux sont coiffés par des groupes thiol ou un PDMS téléchélique à fonctionnalité thiol.

**8.** Système de fermeture ou d'interconnexion selon la revendication 6, dans lequel le polymère de base comprend un polydiméthylsiloxane à terminaisons vinyle, optionnellement dans lequel le polymère de base comporte une ou plusieurs des propriétés suivantes :

a) une masse moléculaire moyenne en nombre Mn de 5 000 g/mol à 70 000 g/mol lorsqu'elle est mesurée par chromatographie par perméation de gel (GPC) à triple détection selon la description ;
b) une viscosité de 100 $mm^2/s$ à 165 000 $mm^2/s$ lorsqu'elle est mesurée à l'aide d'un viscosimètre Brookfield selon la description ;
c) une teneur en vinyle de 0,01 mmol/g à 0,1 mmol/g.

**9.** Système de fermeture ou d'interconnexion selon la revendication 6, dans lequel l'agent de réticulation comprend un copolymère de polydiméthylsiloxane ayant une teneur en thiol de 0,1 mmol/g à 10 mmol/g, mesurée par RMN $^1H$, et une masse moléculaire de 2 000 g/mol à 20 000 g/mol, mesurée par GPC à triple détection, optionnellement dans lequel l'agent de réticulation est un copolymère de (mercaptopropyl)méthylsiloxane-diméthylsilsiloxane ayant une teneur en thiol de 0,1 mmol/g à 10 mmol/g, mesurée par RMN $^1H$, et une masse moléculaire de 2 000 g/mol à 20 000 g/mol, mesurée par GPC à triple détection.

**10.** Système de fermeture ou d'interconnexion selon la revendication 6, dans lequel l'initiateur est un photoinitiateur, optionnellement dans lequel le photoinitiateur est sélectionné dans le groupe constitué de l'acétophénone, de l'anisoïne, de l'anthraquinone, du benzile, de la benzoïne, de l'éther éthylique de benzoïne, de l'éther isobutylique de benzoïne, de l'éther méthylique de benzoïne, de la benzophénone, de la benzophénone/1-hydroxycyclohexylphénylcétone, du dianhydride 3,3',4,4'-benzophénonetétracarboxylique, du benzoylbiphényle, de la 2-benzyl-2-(diméthylamino)-4'-morpholinobutyrophénone, de la 4,4'-bis(diéthylamino)benzophénone, de la 4,4'-bis(diméthylamino)benzophénone, de la camphorquinone, de la 2-chlorothioxanthén-9-one, de la dibenzosubérénone, de la 2,2-diéthoxyacétophénone, de la 4,4'-dihydroxybenzophénone, de la 2,2-diméthoxy-2-phénylacétophénone, de la 4-(diméthylamino)benzophénone, du 4,4'-diméthylbenzile, de la 2,5-diméthylbenzophénone, de la 3,4-diméthylbenzophénone, de l'oxyde de diphényl(2,4,6-triméthylbenzoyl)phosphine/2-hydroxy-2-méthylpropiophénone, de la 4'-éthoxyacétophénone, de la 2-éthylanthraquinone, de la 3,3'-hydroxyacétophénone, de la 4,4'-hydroxyacétophénone, de la 3-hydroxybenzophénone, de la 4-hydroxybenzophénone, de la 1-hydroxycyclohexylphénylcétone, de la 2-hydroxy-2-méthylpropiophénone, de la 2-méthylbenzophénone, de la 3-méthylbenzophénone, du formiate de méthybenzoyle, de la 2-méthyl-4'-(méthylthio)-2-morpholinopropiophénone, de la phénanthrènequinone, de la 4'-phénoxyacétophénone, et de la thioxanthén-9-one, et de mélanges de ceux-ci.

**11.** Système de fermeture ou d'interconnexion selon la revendication 6, dans lequel l'initiateur est un initiateur thermique, optionnellement dans lequel l'initiateur thermique est un peroxyde ou un composé azoïque, optionnellement dans lequel l'initiateur thermique est sélectionné dans le groupe constitué du 2,2'-azobisisobutyronitrile (AIBN), d'analogues cyclohexyle de l'AIBN, du 2,2'-azobis(4-méthoxy-2,4-diméthylvaléronitrile), et de mélanges de ceux-ci.

**12.** Système de fermeture ou d'interconnexion selon la revendication 6, dans lequel le procédé de fabrication du gel de silicone sec comprend en outre la fourniture d'au moins un additif sélectionné dans le groupe constitué de retardateurs de flamme, d'agents de coloration, de promoteurs d'adhérence, de stabilisants, de charges, de dispersants, d'agents améliorant l'écoulement, de plastifiants, d'agents glissants, d'agents de renforcement, et de combinaisons de ceux-ci, optionnellement de 0,1 % en poids à 30 % en poids d'un agent de renforcement, optionnellement dans lequel l'agent de renforcement est une silice pyrogénée.

**13.** Système de fermeture ou d'interconnexion selon la revendication 1, dans lequel le procédé de fabrication du gel de silicone sec comprend :

la fourniture d'une composition comprenant :

le polymère de base sous la forme d'un polydiméthylsiloxane à terminaisons vinyle ayant une masse moléculaire moyenne en nombre de 28 000 g/mol à 70 000 g/mol lorsqu'elle est mesurée par GPC à triple détection selon la description, une viscosité de 3 000 $mm^2/s$ à 7 000 $mm^2/s$ lorsqu'elle est mesurée à l'aide d'un viscosimètre Brookfield selon la description, et une teneur en vinyle de 0,01 mmol/g à 0,1 mmol/g ;
l'agent de réticulation sous la forme d'un agent de réticulation qui est un copolymère de polydiméthylsiloxane ayant une teneur en thiol de 0,1 mmol/g à 10 mmol/g et une masse moléculaire de 2 000 g/mol à 20 000 g/mol lorsqu'elle est mesurée par GPC à triple détection selon la description ;
un agent d'extension de chaîne ;
un photoinitiateur ou un initiateur thermique ; et
un agent de durcissement qui est une silice pyrogénée ; la composition ayant optionnellement un rapport thiol/ène de 1:1 ;

l'apport de chaleur ou de lumière ultraviolette ; et
la réaction du polymère de base, de l'agent de réticulation, et de l'agent d'extension de chaîne en présence de l'initiateur pour former le silicone sec.

**14.** Système de fermeture ou d'interconnexion selon l'une quelconque des revendications 1 à 13, dans lequel le gel de silicone sec est préparé à partir d'une composition comprenant :

45 à 99,99 % en poids du polymère de base comportant un groupe vinyl-silicone ;
0,01 à 5 % en poids de l'agent de réticulation comportant des groupes thiol ; et
0 à 50 % en poids d'un agent d'extension de chaîne comportant des groupes thiol.

**15.** Système de fermeture ou d'interconnexion selon l'une quelconque des revendications 1 à 13, dans lequel la composition comprend 90 à 99,99 % en poids du polymère de base, 0,01 à 5 % en poids de l'agent de réticulation, et 0,01 à 5 % en poids de l'agent d'extension de chaîne.

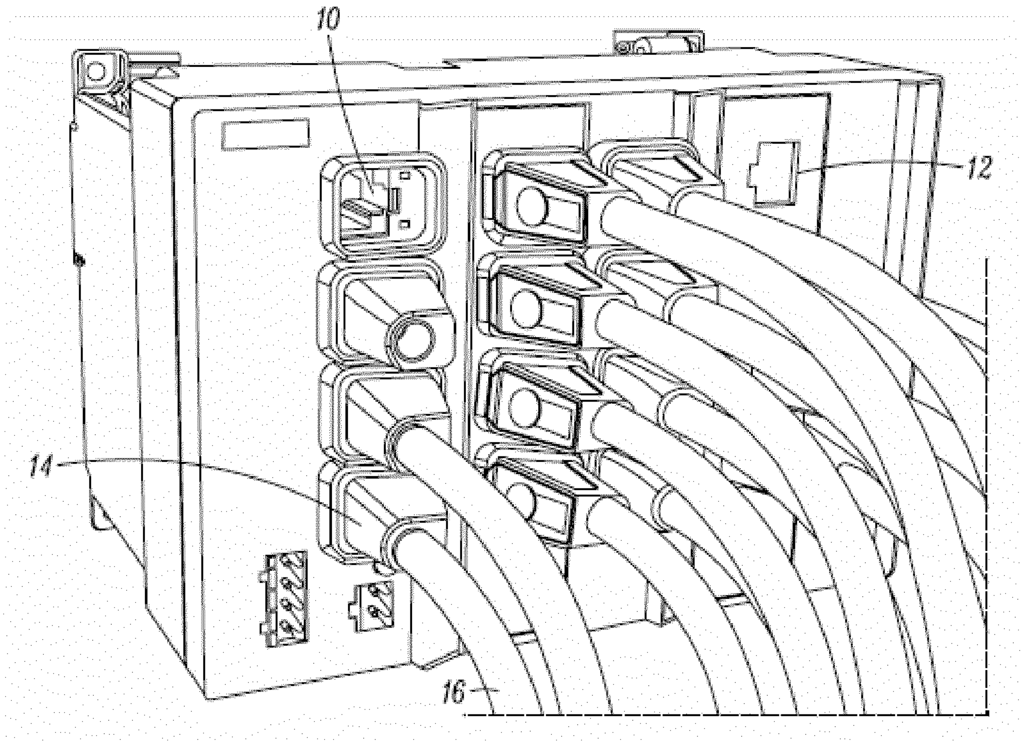


FIG. 1

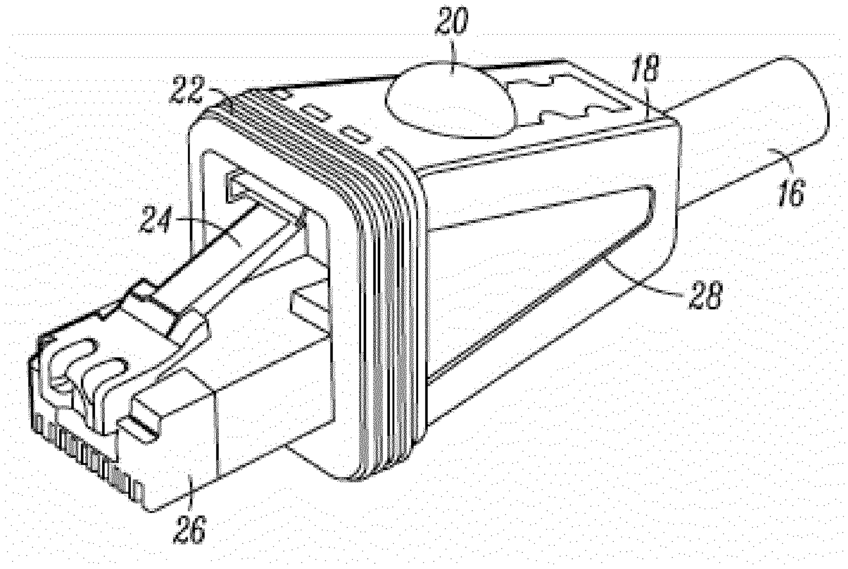


FIG. 2

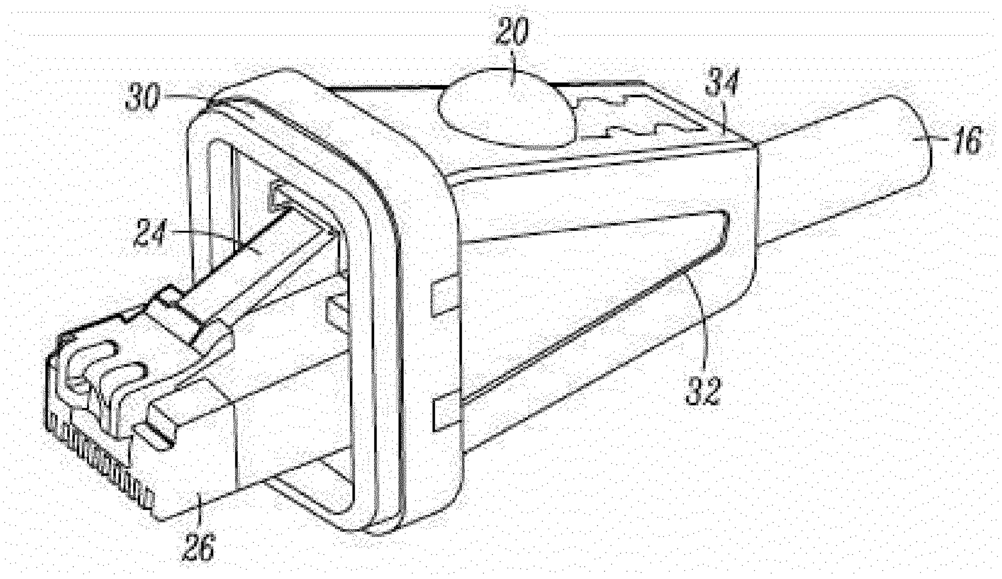


FIG. 3

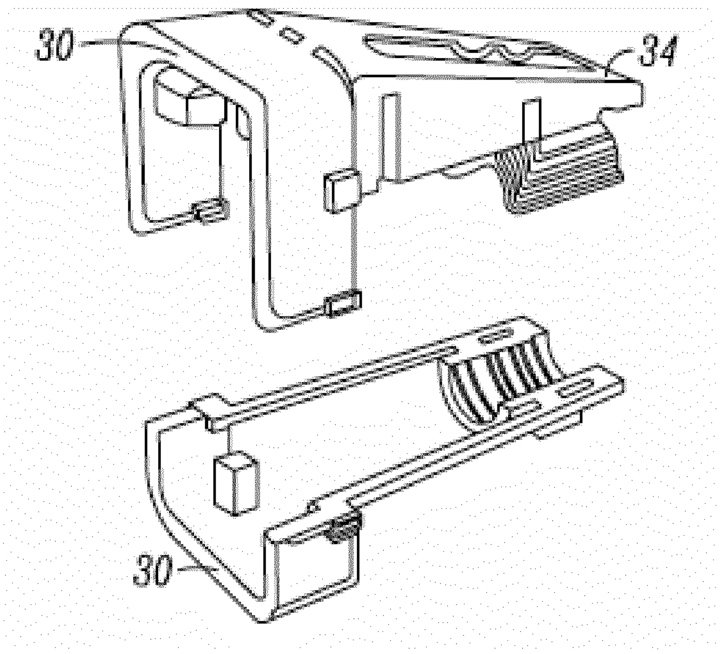


FIG. 4a

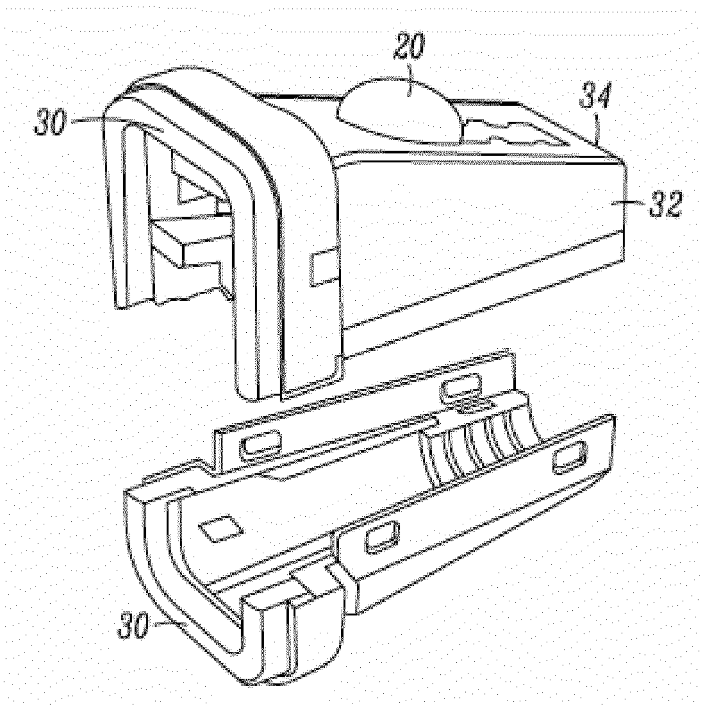


FIG. 4b

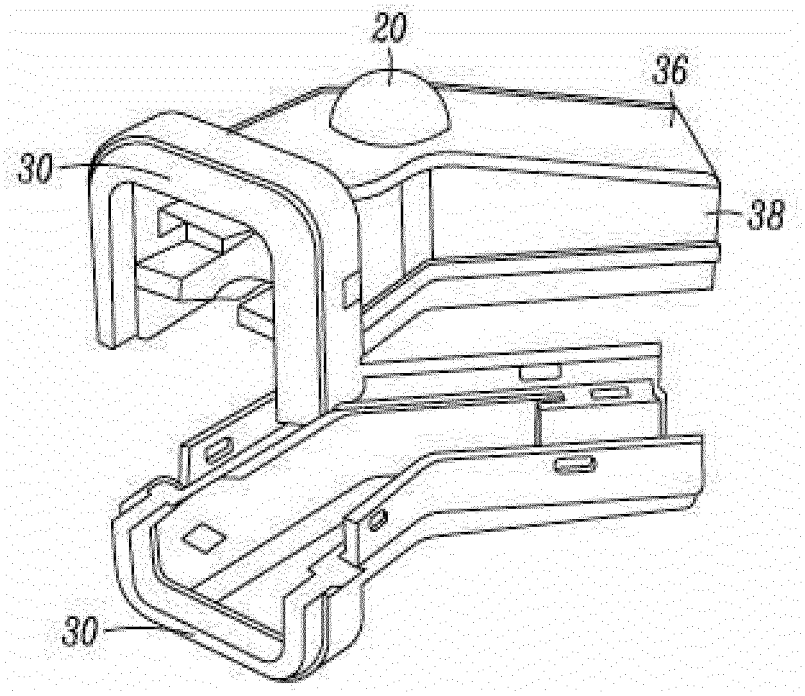


FIG. 5a

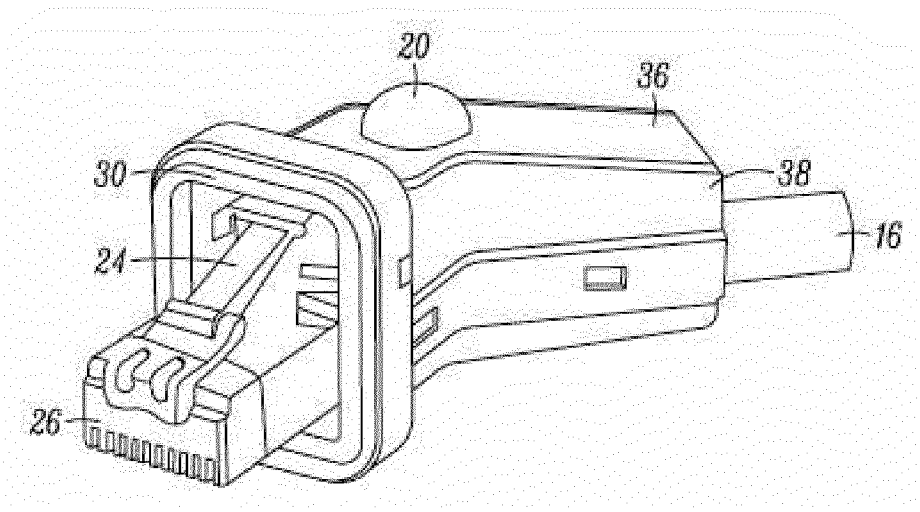


FIG. 5b

FIG. 6

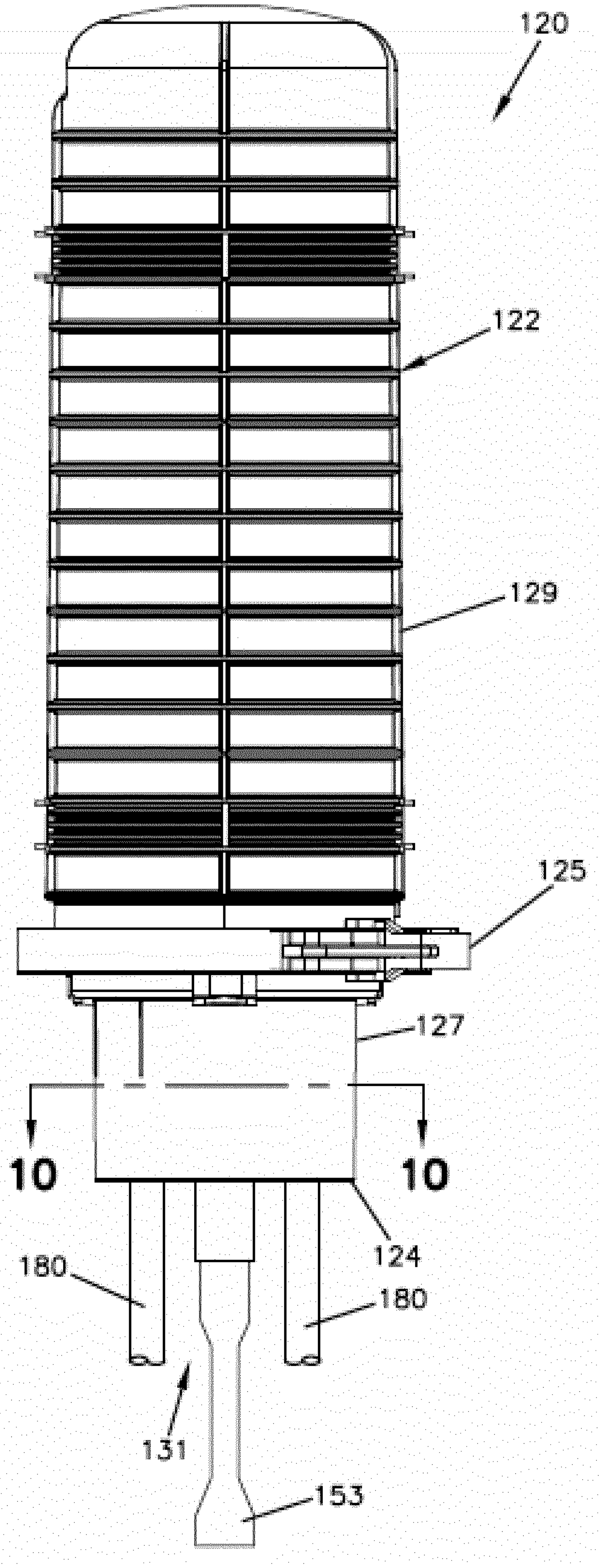

FIG. 7

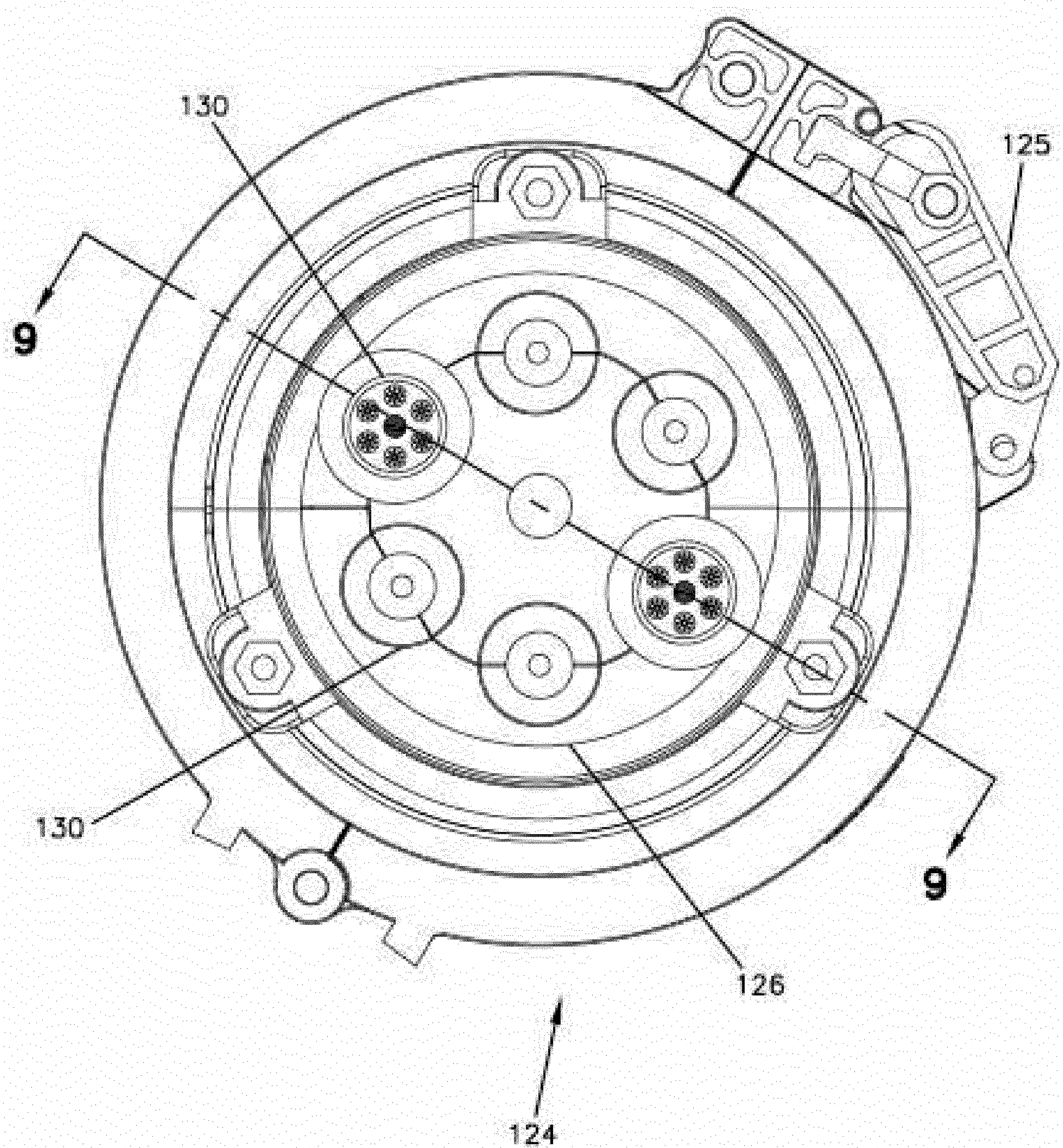

FIG. 8

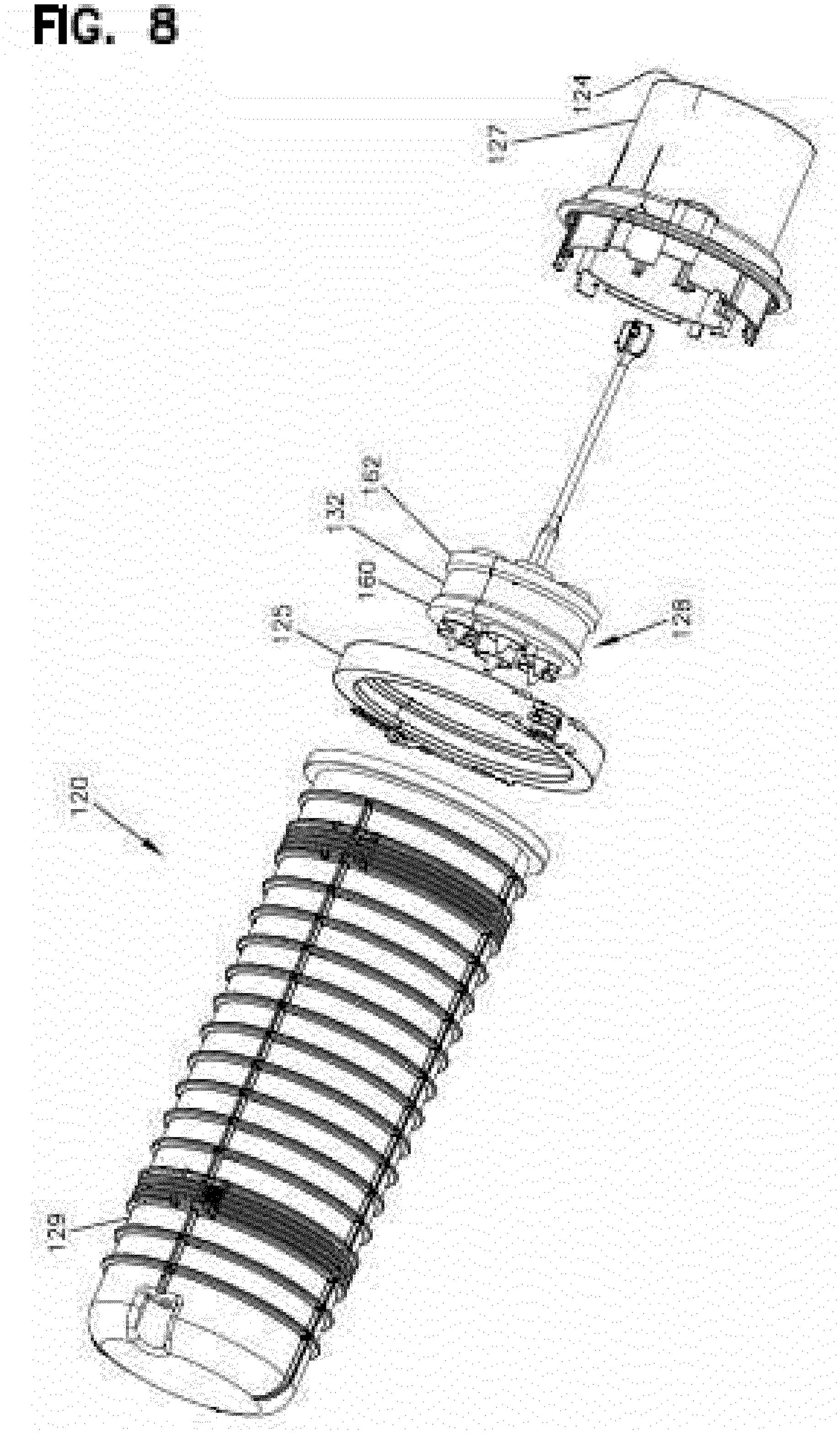

FIG. 9

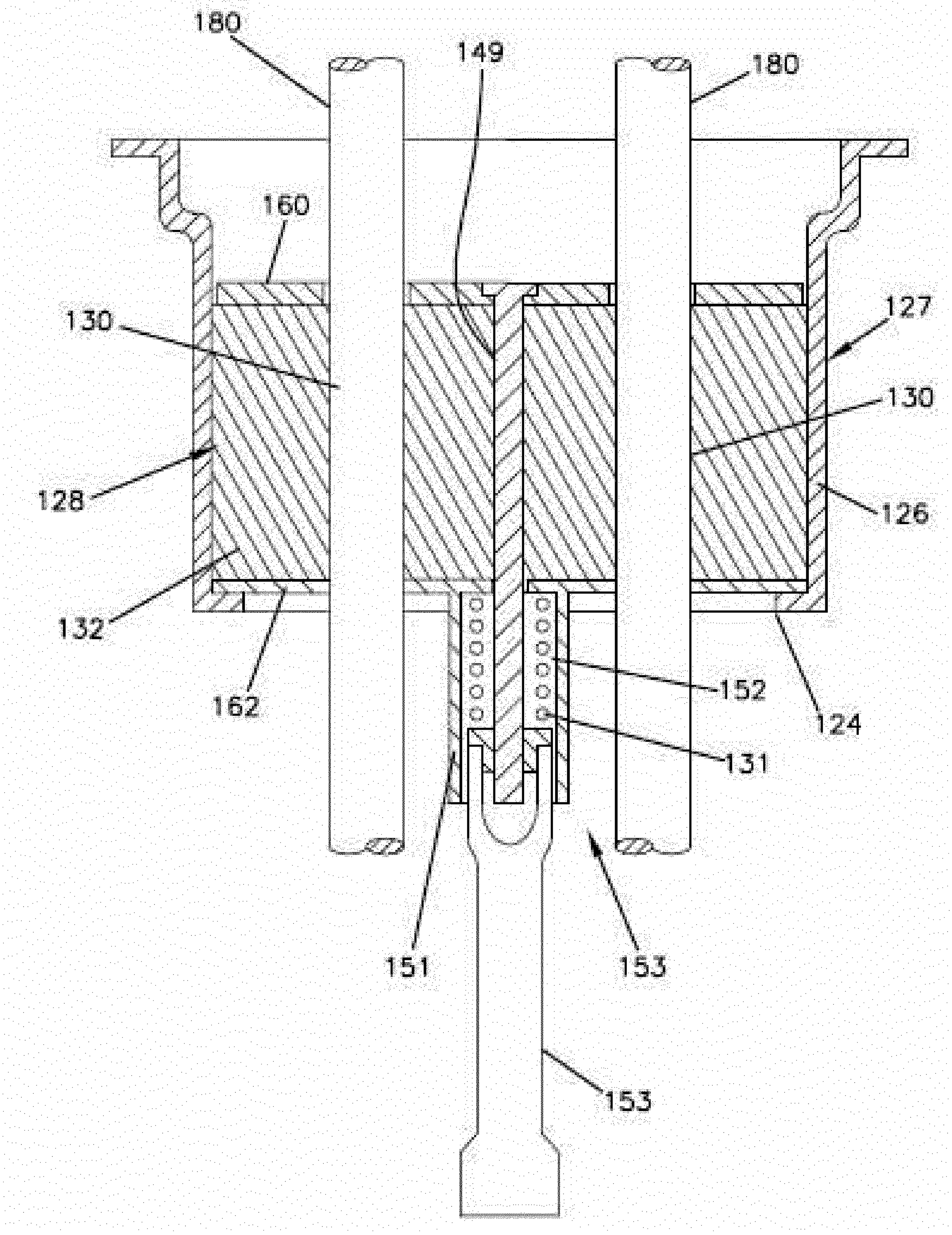
180
149
180
160
130
127
130
128
126
132
162
152
124
131
151
153
153

FIG. 10

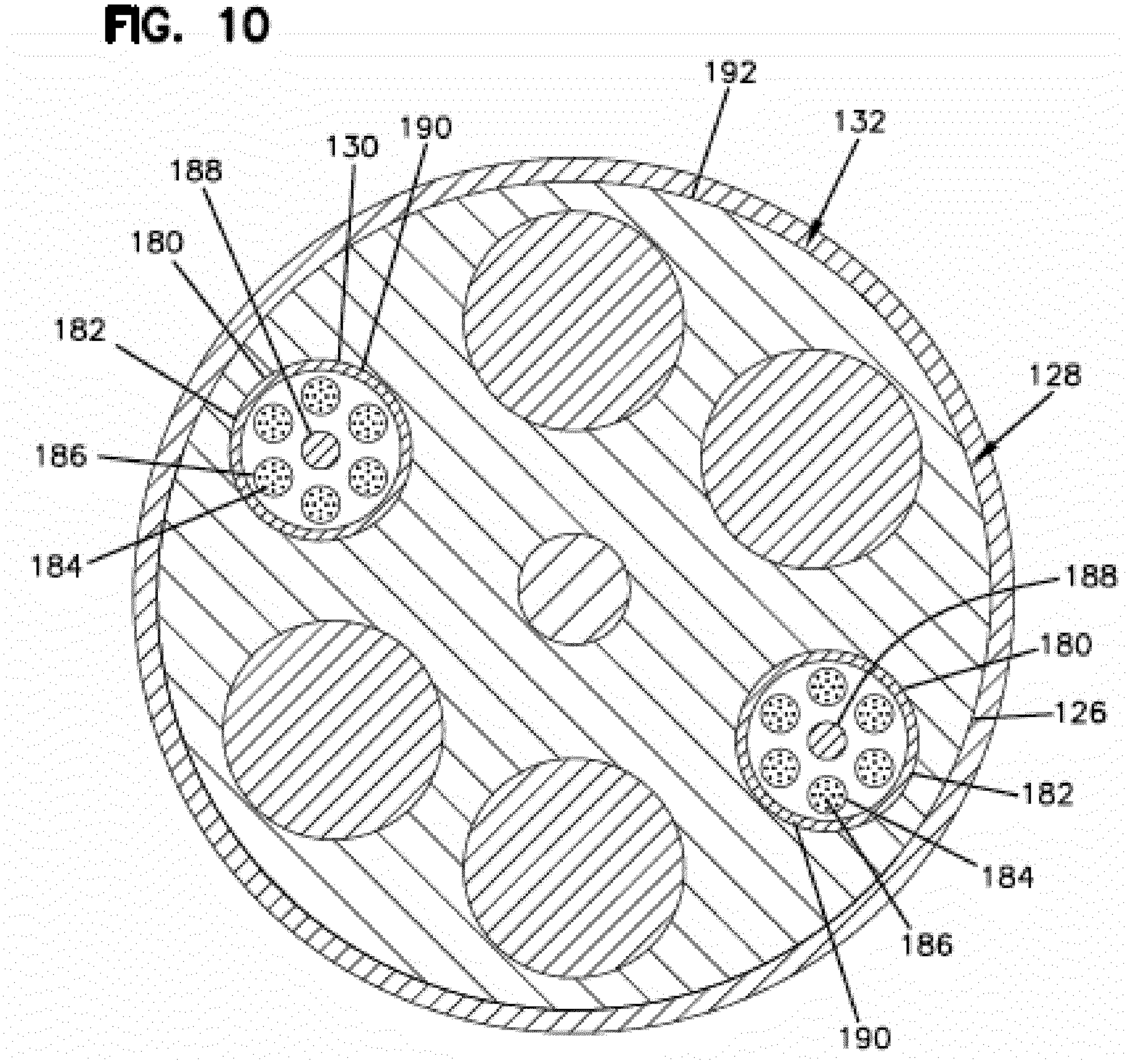
192
132
190
130
188
180
182
128
186
184
188
180
126
182
184
186
190

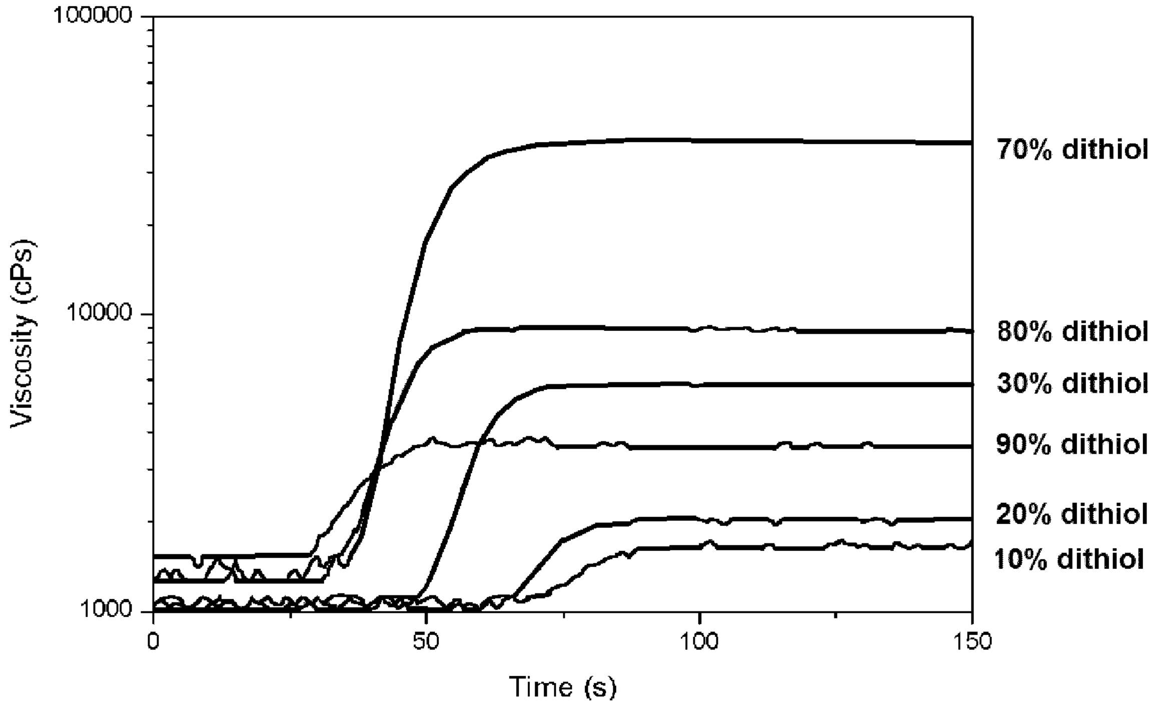
100000
10000
1000
Viscosity (cPs)
0
50
100
150
Time (s)
70% dithiol
80% dithiol
30% dithiol
90% dithiol
20% dithiol
10% dithiol

**FIG. 11**

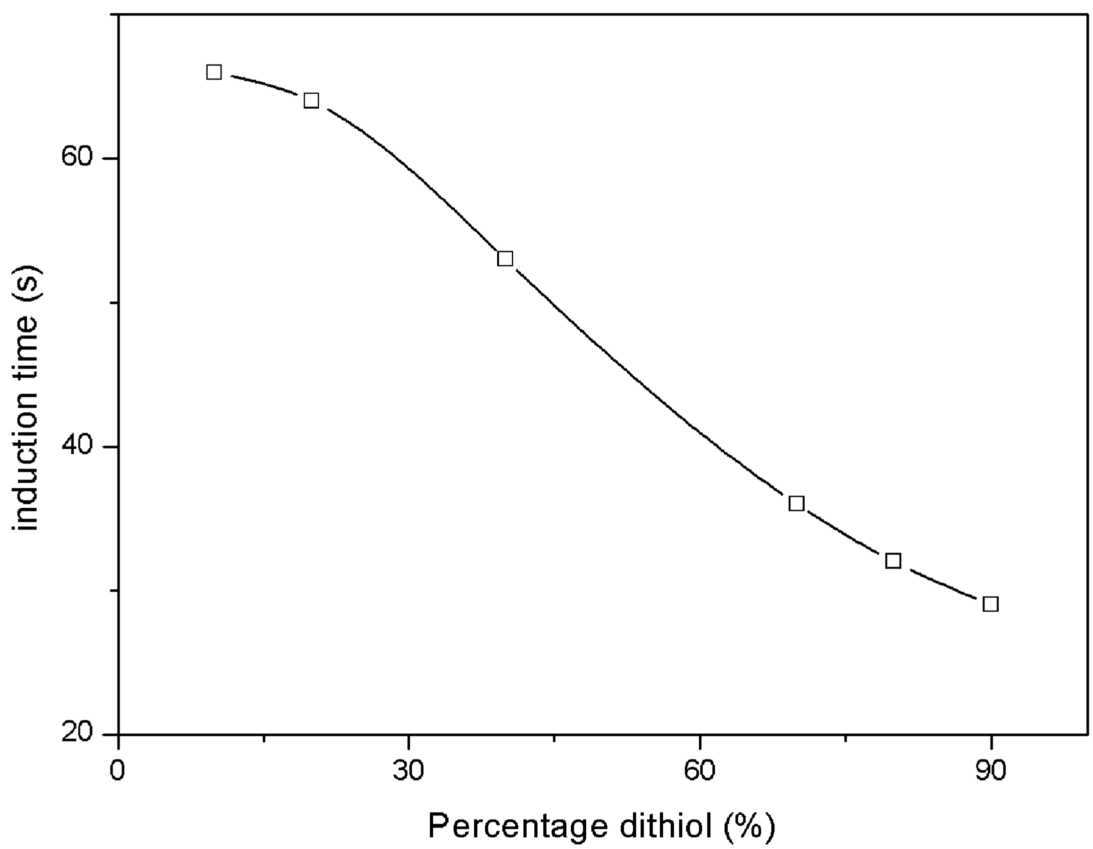


FIG. 12

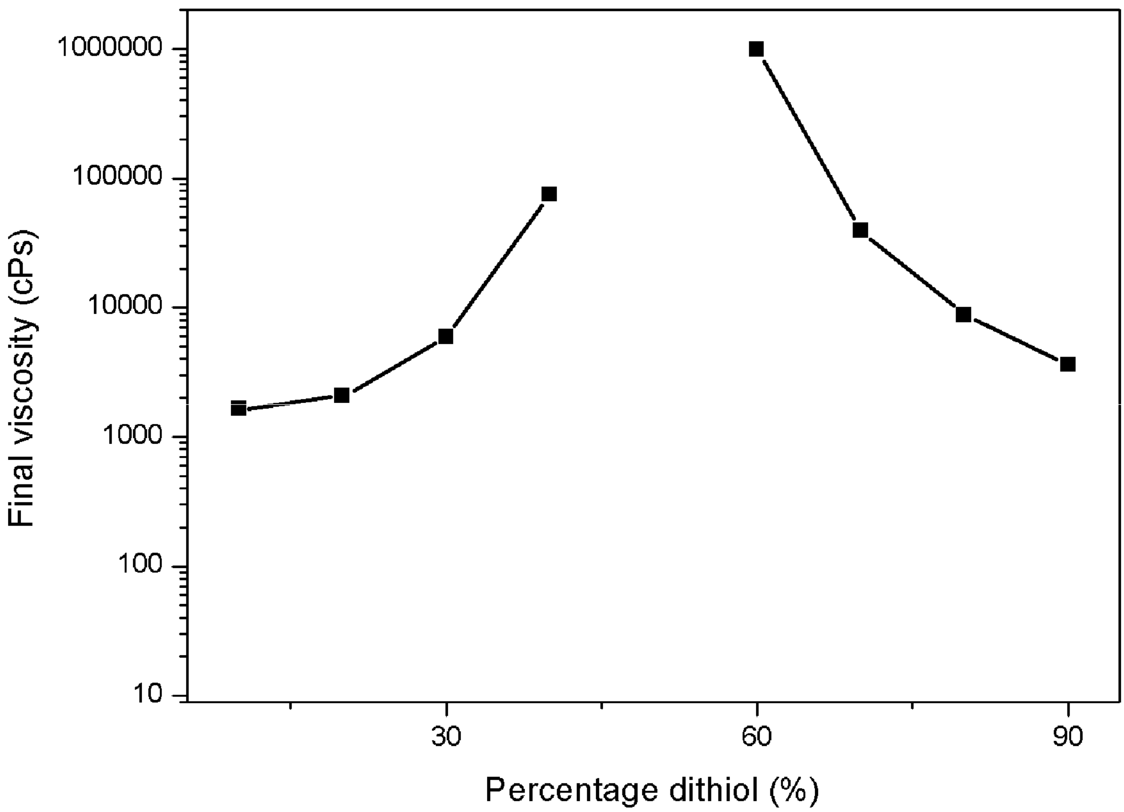

1000000
100000
10000
1000
100
10
Final viscosity (cPs)
30
60
90
Percentage dithiol (%)


FIG. 13

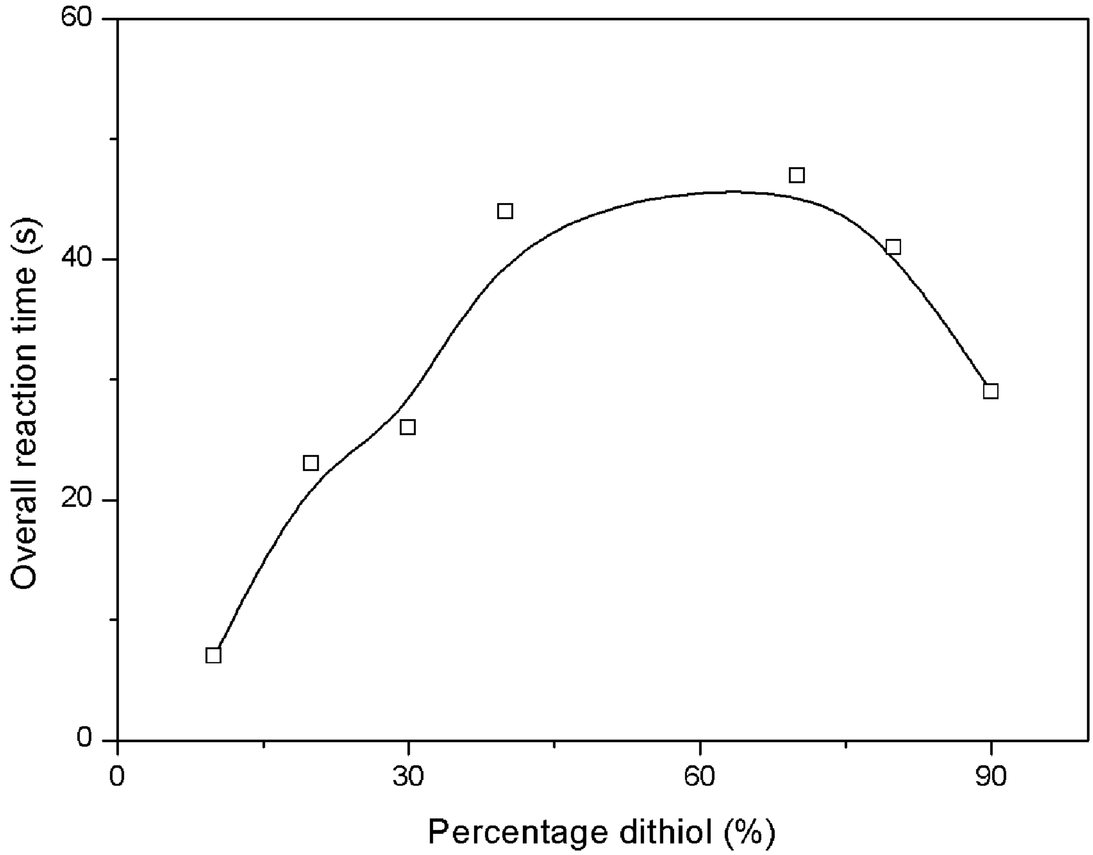
60
40
20
0
0
30
60
90
Overall reaction time (s)
Percentage dithiol (%)

FIG. 14

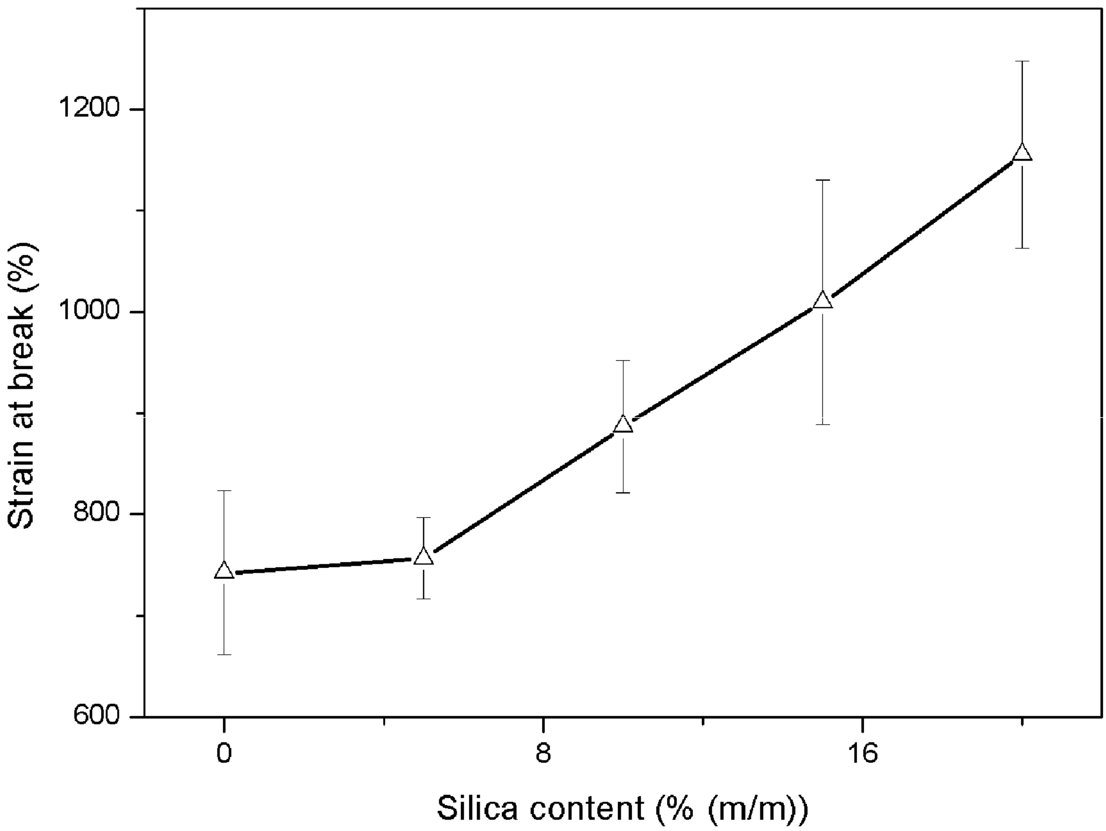


FIG. 15

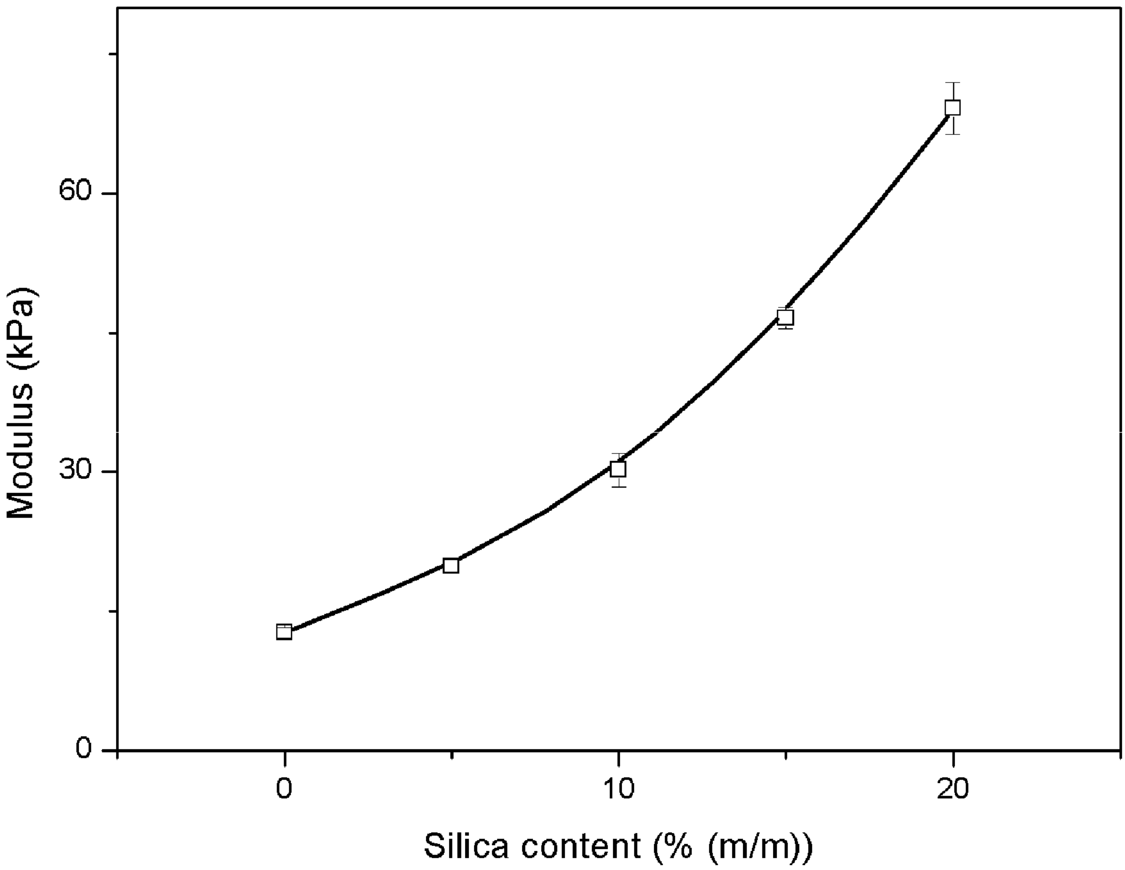


FIG. 16

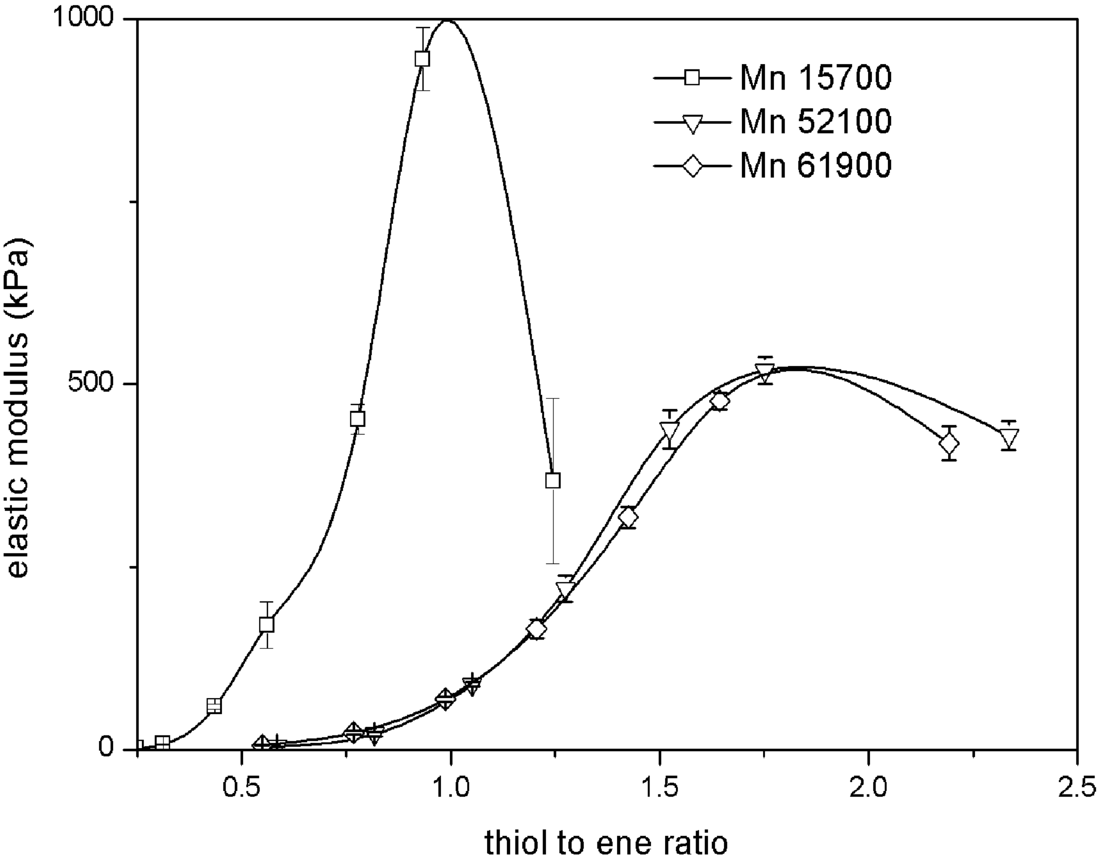
1000
500
0
0.5
1.0
1.5
2.0
2.5
elastic modulus (kPa)
thiol to ene ratio
Mn 15700
Mn 52100
Mn 61900

**FIG. 17**

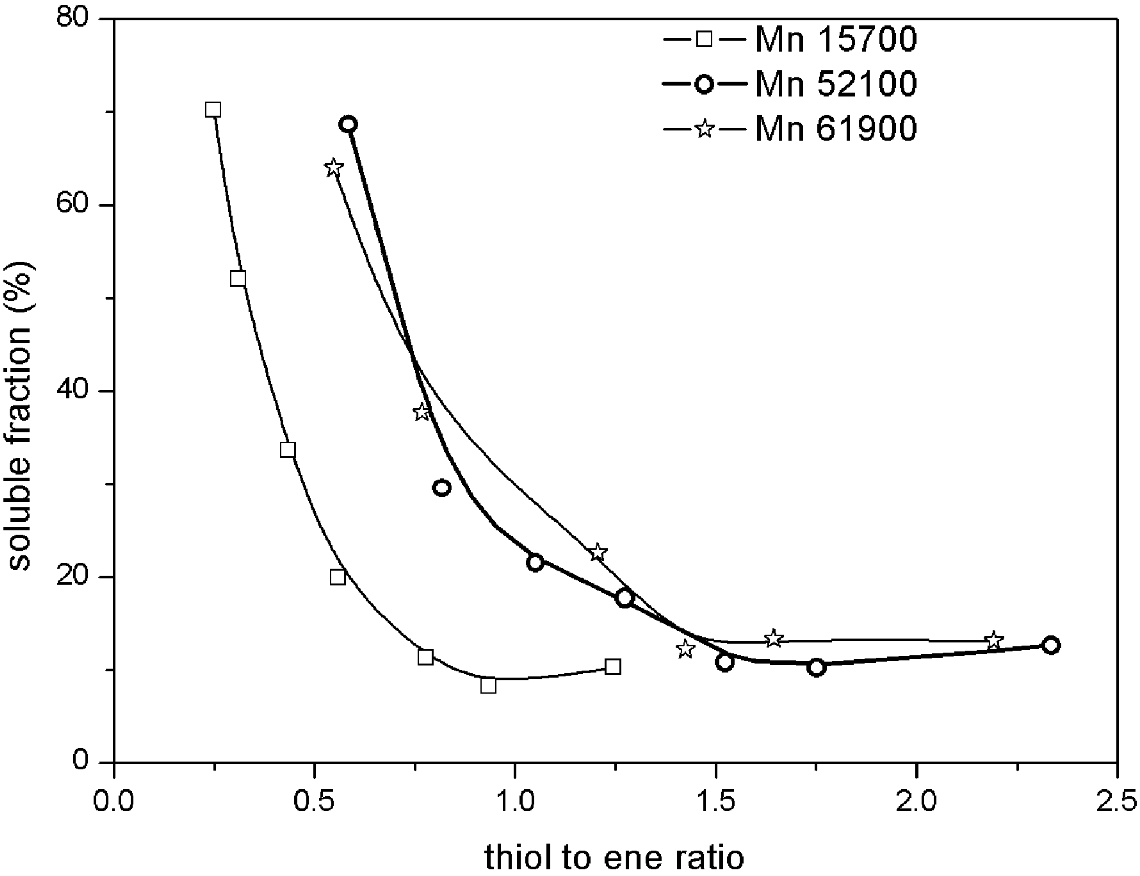

80
60
40
20
0
0.0
0.5
1.0
1.5
2.0
2.5
soluble fraction (%)
thiol to ene ratio
Mn 15700
Mn 52100
Mn 61900


FIG. 18

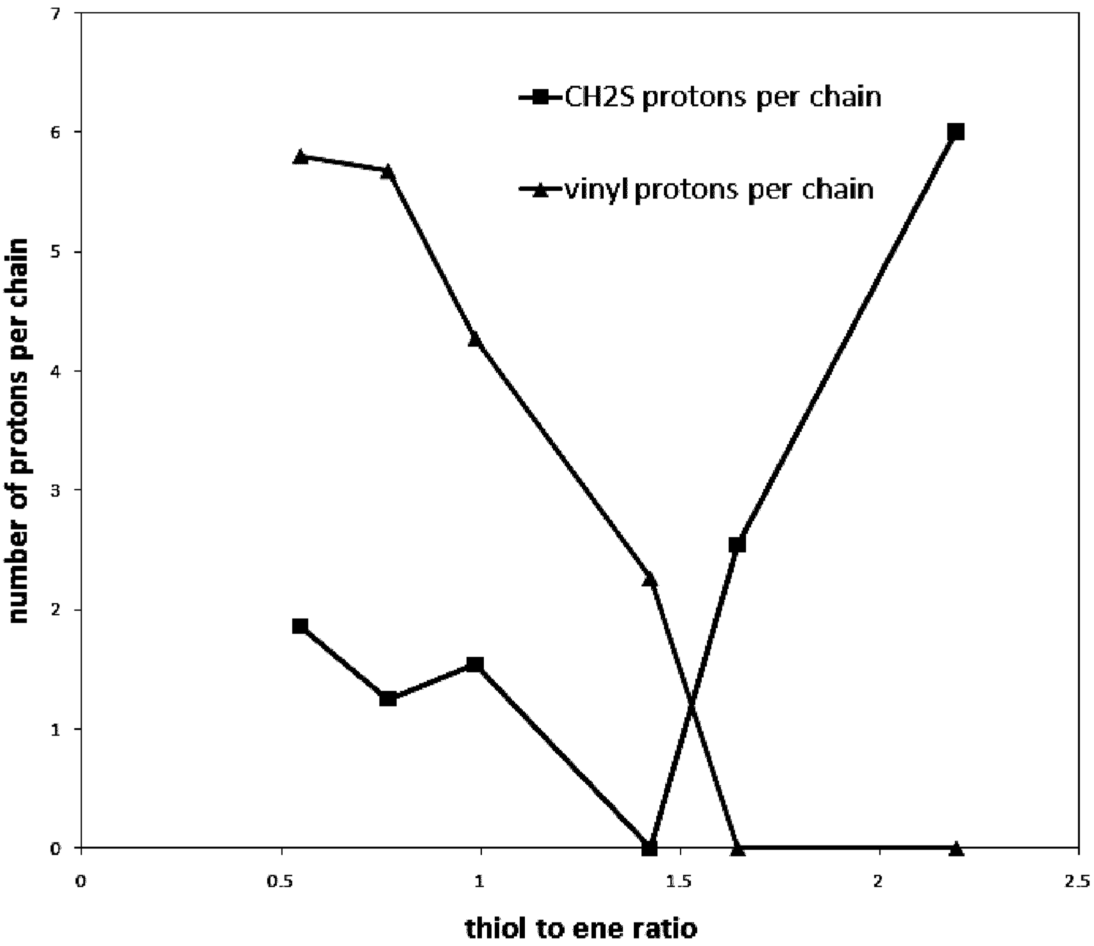

CH2S protons per chain
vinyl protons per chain
number of protons per chain
thiol to ene ratio
0
1
2
3
4
5
6
7
0
0.5
1
1.5
2
2.5


FIG. 19

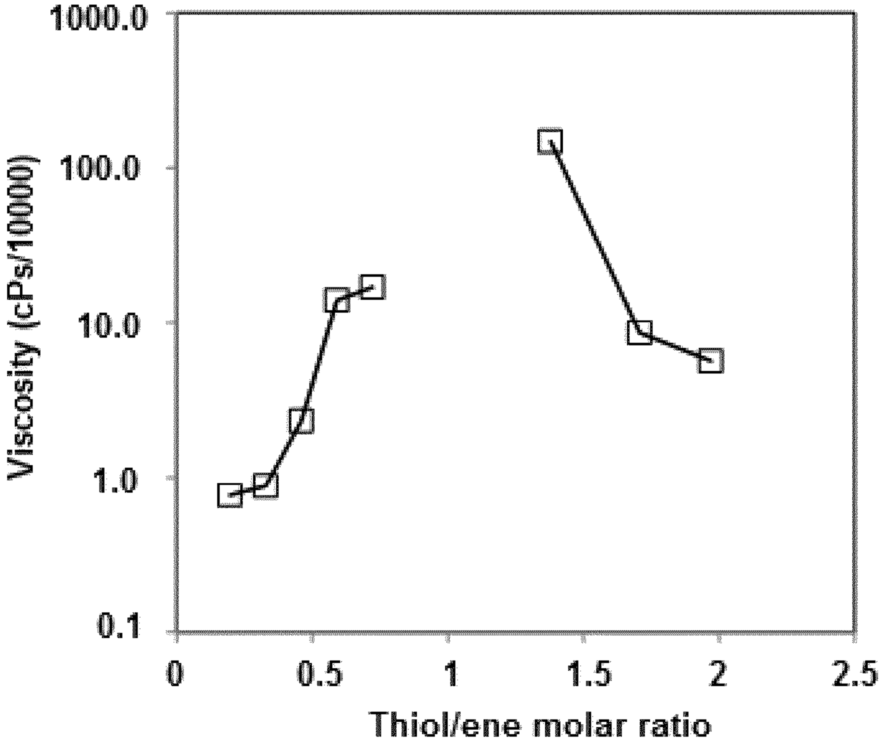


FIG. 20a

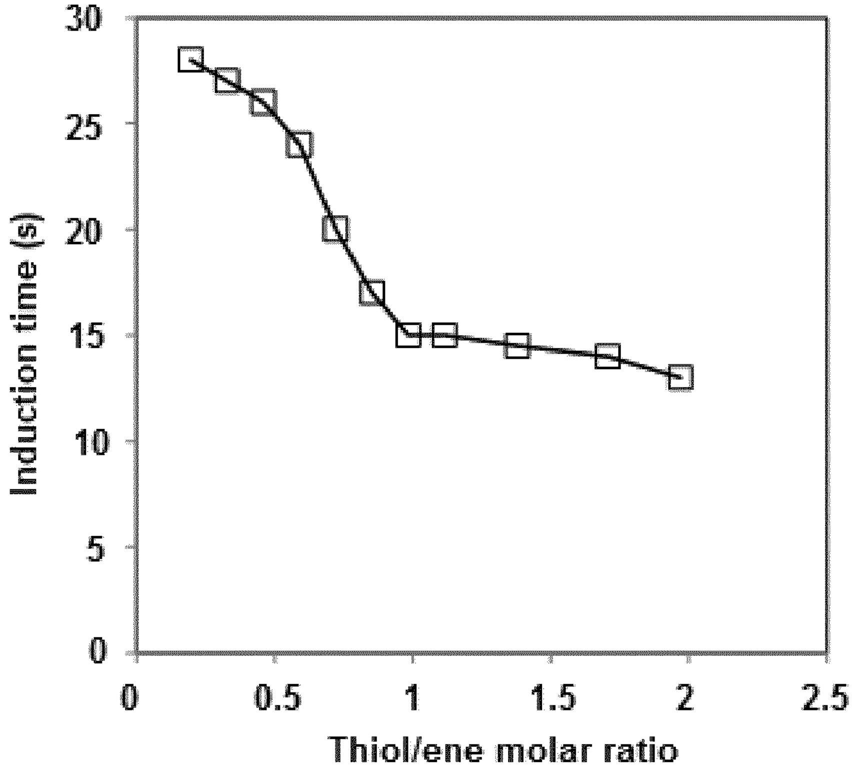


FIG. 20b

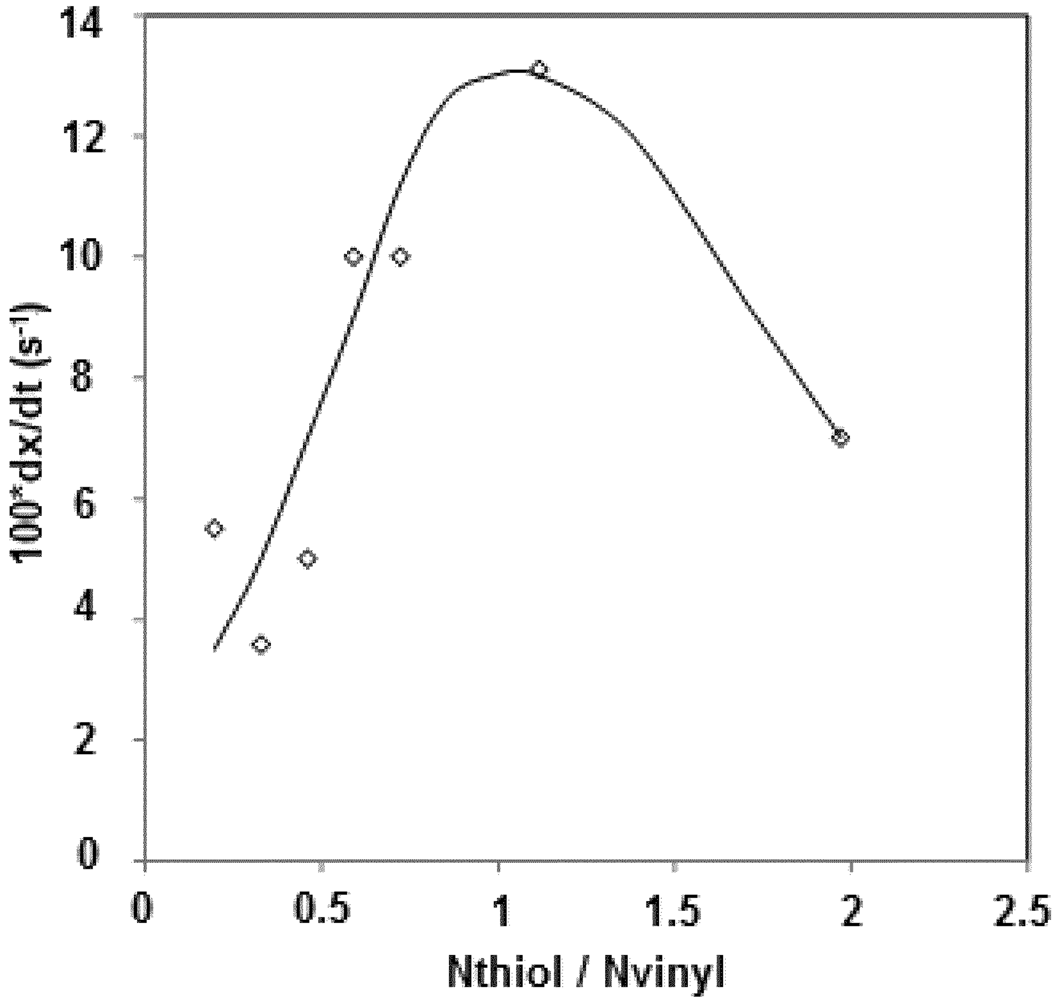


FIG. 21

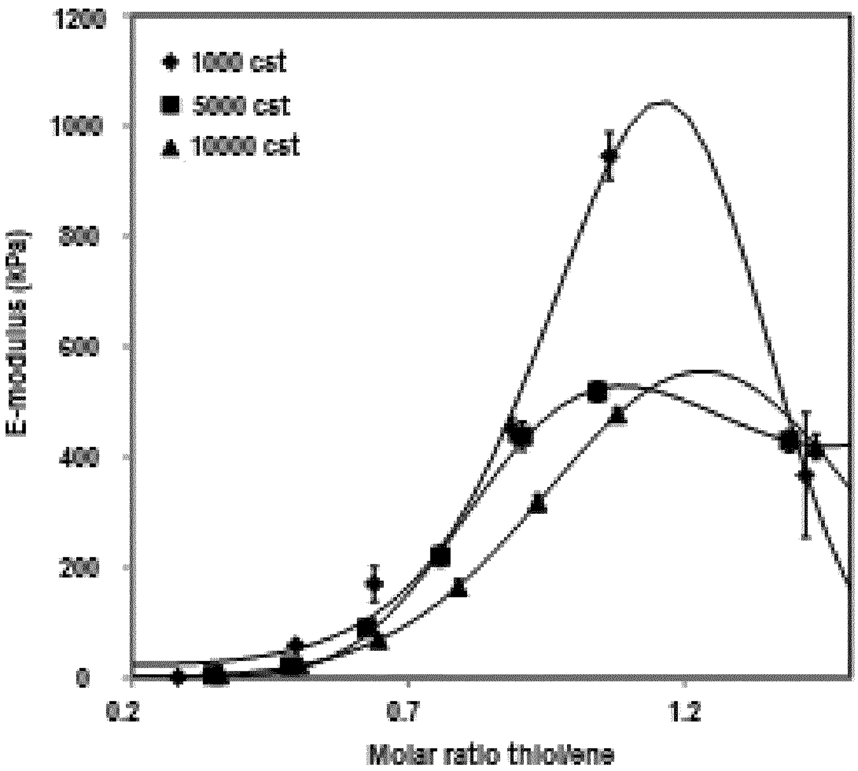


FIG. 22a

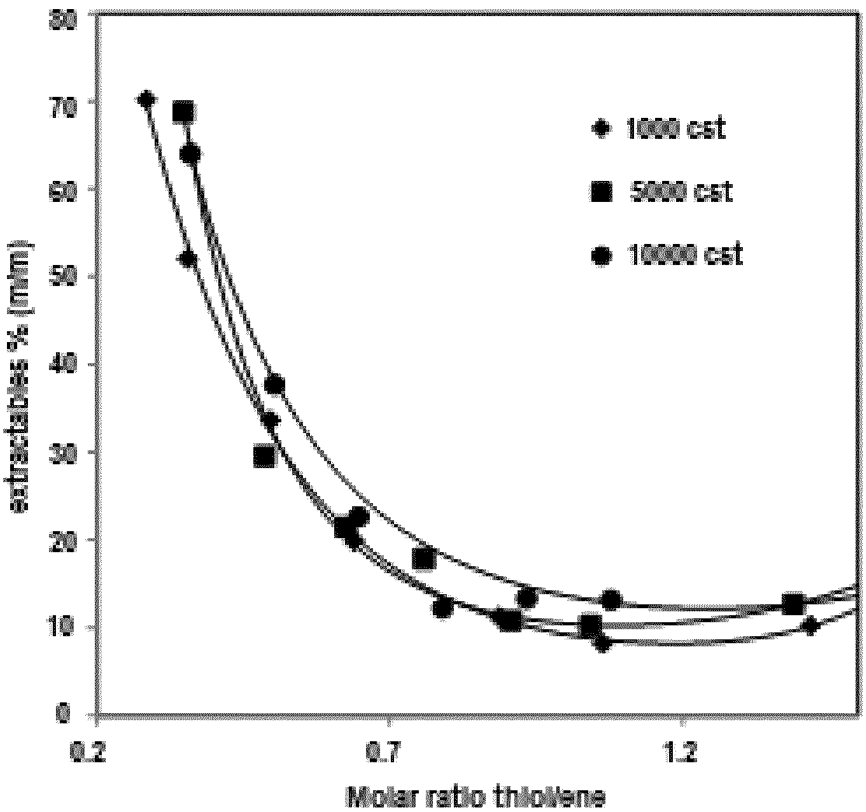


FIG. 22b

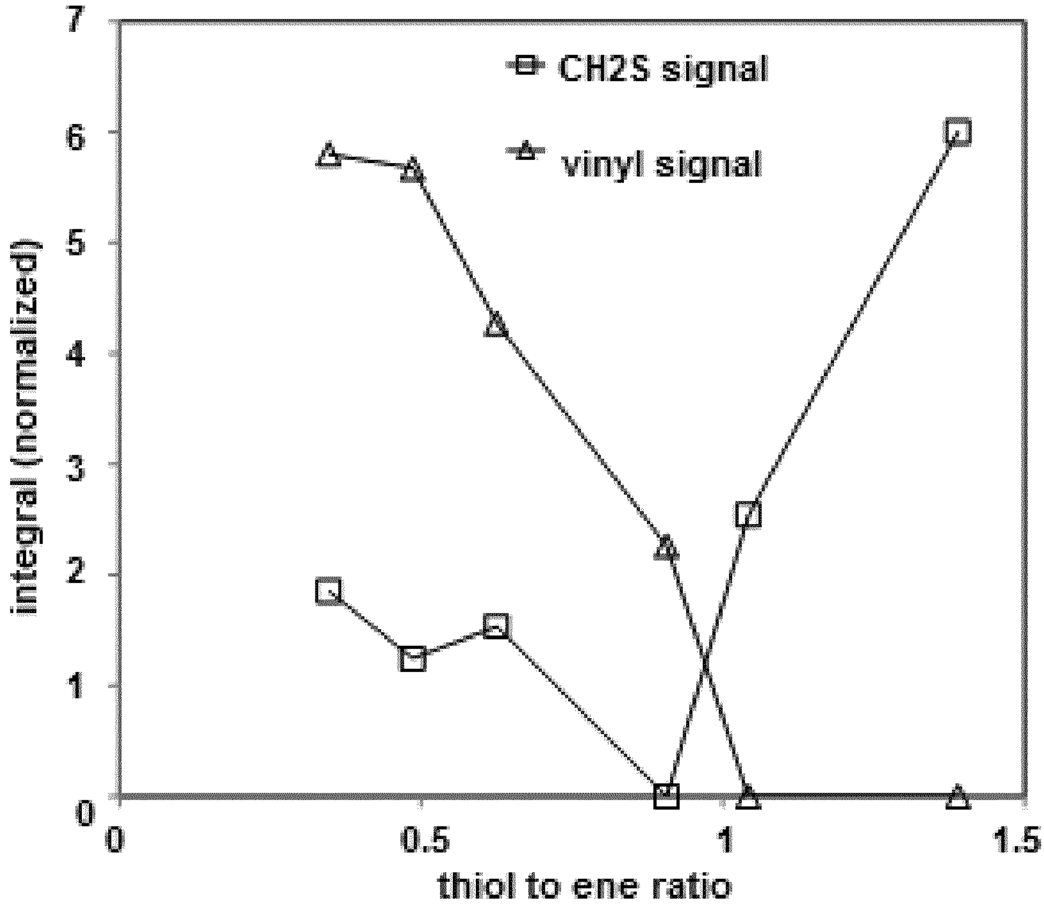
7
6
5
4
3
2
1
0
0
0.5
1
1.5
CH2S signal
vinyl signal
integral (normalized)
thiol to ene ratio

FIG. 23

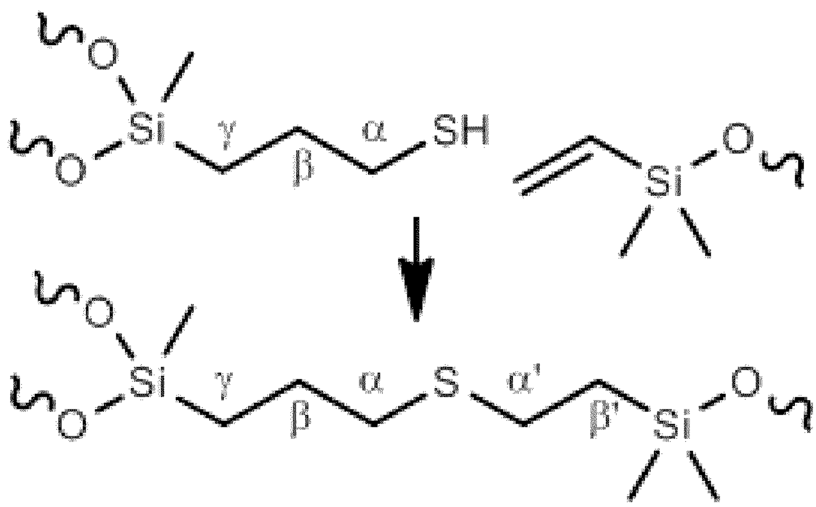

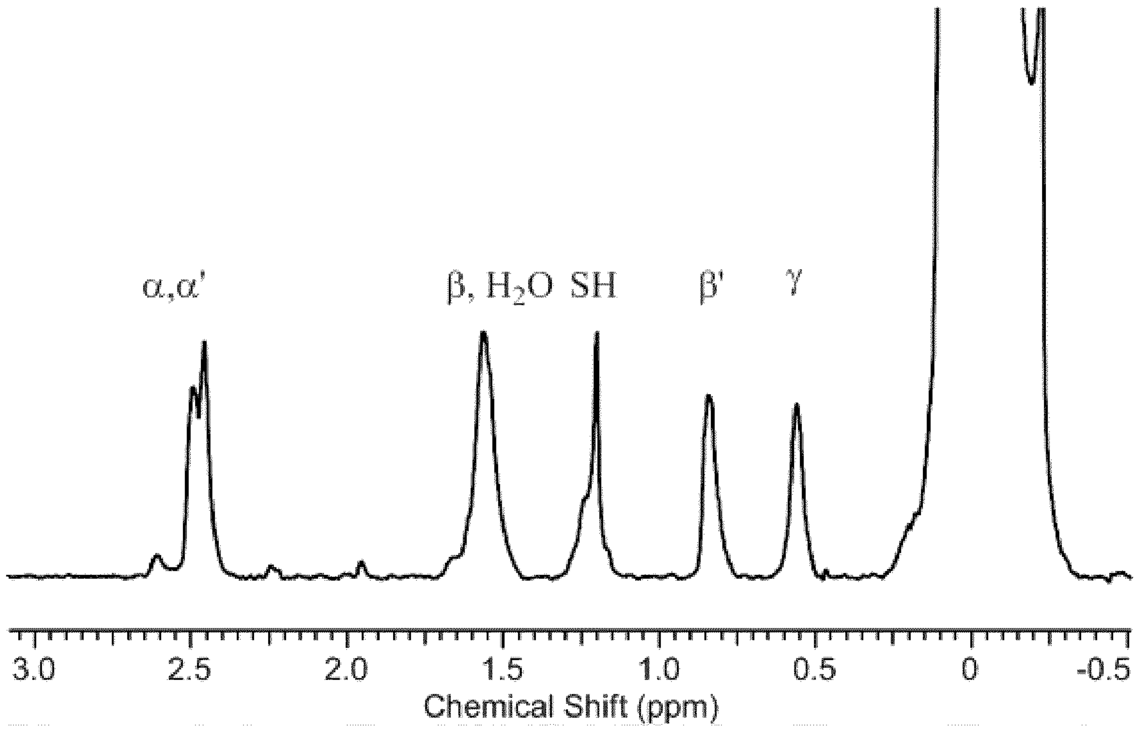


**FIG. 24**

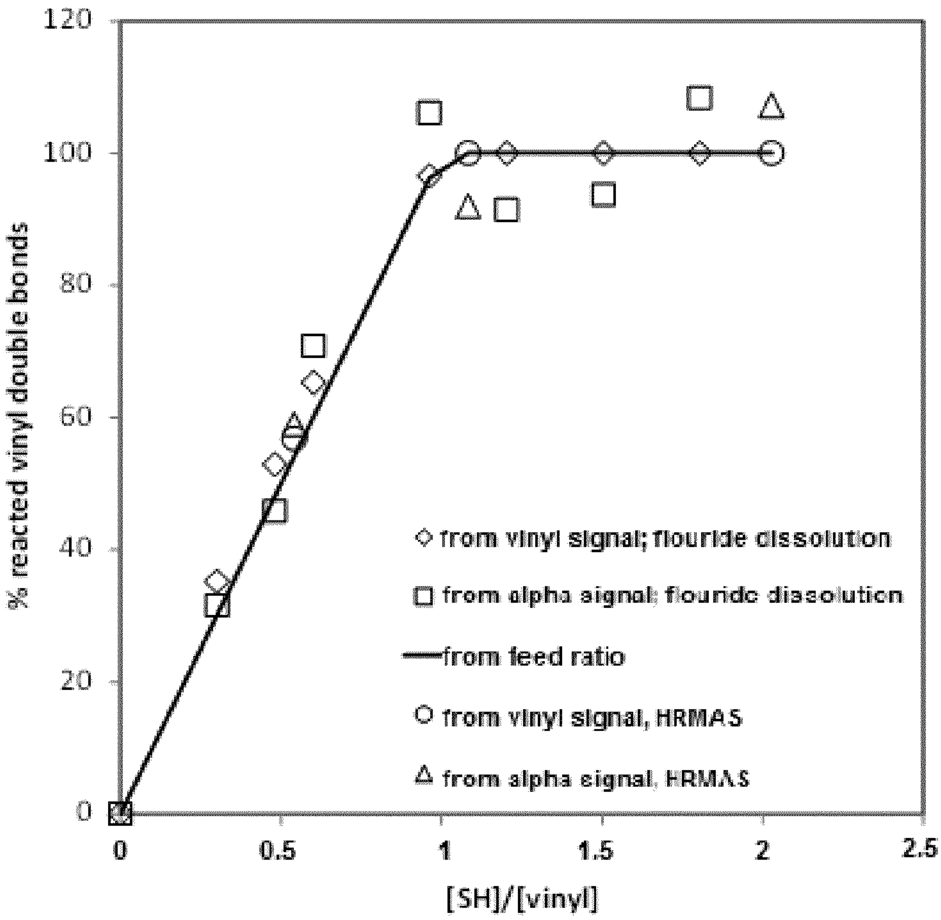
120
100
80
60
40
20
0
% reacted vinyl double bonds
0
0.5
1
1.5
2
2.5
[SH]/[vinyl]
◇ from vinyl signal; flouride dissolution
□ from alpha signal; flouride dissolution
from feed ratio
○ from vinyl signal, HRMAS
△ from alpha signal, HRMAS

FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011136170 A1
- US 200429972 A1
- US 428539 A